# EUROPEAN PATENT SPECIFICATION

(11) **EP 4 114 081 B1**
(45) Date of publication and mention of the grant of the patent: **25.06.2025**
(21) Application number: 20928095.7
(22) Date of filing: 30.03.2020
(51) Int. Cl.: H04W 36/00, H04W 36/36

(54) **COMMUNICATION METHOD, APPARATUS AND SYSTEM**
KOMMUNIKATIONSVERFAHREN, -VORRICHTUNG UND -SYSTEM
PROCÉDÉ, APPAREIL ET SYSTÈME DE COMMUNICATION

(43) Date of publication of application: 04.01.2023
(73) Proprietor: Huawei Technologies Co., Ltd., Shenzhen, Guangdong 518129, (CN)
(72) Inventor: CHANG, Junren, Shenzhen, Guangdong 518129 (CN)
(74) Representative: Pfenning, Meinig & Partner mbB
(86) International application number: PCT/CN2020/082207
(87) International publication number: WO 2021/195890

(56) References cited:
- EP-A1- 3 735 049
- WO-A1-2016/053552
- WO-A1-2020/034901
- CN-A- 108 632 926
- CN-A- 109 495 971
- CN-A- 110 839 264
- US-A1- 2015 057 046
- CHINA TELECOM VIVO CAICT XIAOMI SPREADTRUM APPLE CMCC CHARTER: "Motivation for SI on Multi-SIM devices in RAN", 4 June 2019 (2019-06-04), XP051748379, Retrieved from the Internet <URL:http://www.3gpp.org/ftp/Meetings%5F3GPP%5FSYNC/RAN/Docs/RP%2D191449%2Ezip> [retrieved on 20190604]

## Description

### TECHNICAL FIELD

This application relates to the field of communication technologies, and in particular to two communication methods, two communication apparatuses and a computer-storage medium.

### BACKGROUND

An operator network uses a subscriber identity module (subscriber identity module, SIM) card to authenticate a subscriber and encrypt voice information during a call of the subscriber. A terminal device can be normally used only after a SIM card corresponding to an operator network is mounted on the terminal device. If a plurality of SIM cards are mounted on one terminal device, the terminal device determines gap (gap) configuration information or time division multiplexing (time division multiplexing, TDM) pattern (pattern) configuration information. The GAP configuration information or the TDM pattern configuration information can indicate a time period in which the terminal device can receive a paging (paging) message from another operator network when the terminal device uses one operator network for communication.

However, in a moving process of the terminal device, there is a high probability that the GAP configuration information and the TDM pattern configuration information change. If the GAP configuration information or the TDM pattern configuration information between the terminal device and a network device is not updated in time, the terminal device cannot receive the paging message from the another operator network in time.

EP 3 735 049 A1 discloses wireless communications using multiple wireless networks. This document is only relevant in relation to the provisions of Article 54(3) EPC.

WO 2020/034901 A1 discloses a communication method applied to a dual-card dual-standby single-pass terminal.

WO 2016/053552 A1 discloses processing communications related to multiple subscriptions.

### SUMMARY

Embodiments of this application provide a communication method according to claim 1, a communication method according to claim 9, a communication apparatus according to claim 13, a communication apparatus according to claim 14, and a computer-readable storage medium according to claim 15, to improve a success rate of receiving a paging message by a terminal device.

To achieve the foregoing objectives, the following technical solutions are used in embodiments of this application.

According to a first aspect, an embodiment of this application provides a communication method. The method may be performed by a terminal device, or may be performed by a chip used in a terminal device. The following provides descriptions by using an example in which an execution body is the terminal device. The method includes: After determining a target first cell, determining to reselect a first cell, or determining to have reselected a first cell, the terminal device sends first information to a network device. The first cell belongs to a first network. The network device belongs to a second network. The first information is determined by the terminal device. The first information includes first configuration information and/or first timing offset information. The first configuration information includes to-be-used gap GAP configuration information or to-be-used time division multiplexing TDM pattern configuration information of the terminal device. The first timing offset information includes a downlink timing offset between the first cell and a second cell. The second cell belongs to the second network, and a network device in the second network transmits data with the terminal device.

Herein, in the second network, if the terminal device does not perform cell handover in a process of performing cell reselection or before performing cell reselection, the second cell is a cell accessed by the terminal device when the terminal device transmits data with the network device in the second network. If the terminal device performs cell handover in a process of performing cell reselection or before performing cell reselection, the second cell is a target cell after the terminal device hands over.

In other words, when the terminal device determines the target first cell, determines to reselect the first cell, or determines to have reselected the first cell, the terminal device can update the first configuration information in time, so that the network device in the second network can obtain the updated first configuration information in time. Therefore, after reselecting the first cell, in a process of transmitting data with the network device in the second network, the terminal device can still receive a paging message from a network device in the first network in time. This can improve a success rate of receiving the paging message. Alternatively, when the terminal device determines the target first cell, determines to reselect the first cell, or determines to have reselected the first cell, the terminal device and the network device in the second network can obtain the updated first timing offset information in time, and can determine the first configuration information based on the first timing offset information. This can also improve a success rate of receiving a paging message.

In a possible design, after the terminal device has reselected the first cell, the to-be-used GAP configuration information of the terminal device includes GAP configuration information used by the terminal device when the terminal device transmits data with the network device in the second network. Alternatively, after the terminal device has reselected the first cell, the to-be-used TDM pattern configuration information of the terminal device includes TDM pattern configuration information used by the terminal device when the terminal device transmits data with the network device in the second network.

In a possible design, the communication method in this embodiment of this application further includes: The terminal device determines the first configuration information based on downlink timing of the first cell and downlink timing of the second cell. Alternatively, the terminal device determines the first configuration information based on downlink timing of a cell before reselection, downlink timing of the first cell, and downlink timing of the second cell. Alternatively, the terminal device determines the first configuration information based on downlink timing of a cell before reselection, downlink timing of the first cell, downlink timing of the second cell, and second configuration information. The second configuration information is GAP configuration information or TDM pattern configuration information used by the terminal device before the terminal device reselects the first cell. Herein, the cell before reselection is a cell on which the terminal device last camps before reselecting the first cell in the first network.

In this way, the terminal device determines the first configuration information based on downlink timing of different cells, to update the first configuration information in time, so that after reselecting the first cell, the terminal device can not only transmit data with the network device in the second network, but also receive the paging message from the network device in the first network.

In a possible design, the communication method in this embodiment of this application further includes: The terminal device determines the first configuration information based on downlink timing offset information between the first cell and the second cell. Alternatively, the terminal device determines the first configuration information based on downlink timing offset information between the first cell and the second cell and downlink timing offset information between the second cell and a cell before reselection. Alternatively, the terminal device determines the first configuration information based on downlink timing offset information between the first cell and the second cell and second configuration information. Alternatively, the terminal device determines the first configuration information based on downlink timing offset information between the first cell and the second cell, downlink timing offset information between the second cell and a cell before reselection, and second configuration information. The second configuration information is GAP configuration information or TDM pattern configuration information used by the terminal device before the terminal device reselects the first cell.

In this way, the terminal device determines the first configuration information based on downlink timing offset information between different cells, to update the first configuration information in time, so that after reselecting the first cell, the terminal device can not only transmit data with the network device in the second network, but also receive the paging message from the network device in the first network.

In a possible design, the communication method in this embodiment of this application further includes: when a first condition is met, the terminal device determines the first information. The first condition includes at least one of the following: the terminal device has camped on the first cell; the downlink timing of the cell before the terminal device reselects is different from the downlink timing of the first cell; a downlink timing offset between the downlink timing of the cell before the terminal device reselects and the downlink timing of the first cell is greater than a first threshold; and a network device to which the cell before the terminal device reselects belongs is different from a network device to which the first cell belongs.

In this way, the terminal device can determine the first information only when the specific condition is met, to prevent the terminal device from frequently updating the first information, and also prevent the terminal device from frequently sending the first information to the network device in the second network. This can save air interface resources.

In a possible design, the communication method in this embodiment of this application further includes: The terminal device obtains the downlink timing of the cell before reselection. If the terminal device determines that there is a cell that has the same downlink timing as the cell before reselection, the terminal device uses, as the first cell, the cell that has the same downlink timing as the cell before reselection. Alternatively, the terminal device uses, as the first cell, a cell whose offset from the downlink timing of the cell before reselection is less than or equal to the first threshold.

In this way, when the terminal device performs cell reselection, the downlink timing of the cell before the terminal device reselects and downlink timing of a cell after the terminal device reselects can be the same or close to each other, to reduce a probability of paging message receiving failure caused by a downlink timing difference between cells.

In a possible design, if the first information is the first timing offset information, the communication method in this embodiment of this application further includes: The terminal device determines the first configuration information based on the first timing offset information. The first configuration information includes the to-be-used GAP configuration information or the to-be-used TDM pattern configuration information of the terminal device.

In this way, the terminal device can obtain the first configuration information based on the first timing offset information, so that after reselecting the first cell, the terminal device transmits data with the network device in the second network by using the first configuration information. This can ensure that the terminal device receives the paging message from the network device in the first network in time.

In a possible design, the communication method in this embodiment of this application further includes: The terminal device receives a first acknowledgment message from the network device, where the first acknowledgment message indicates that the network device has received the first information. In this way, the terminal device can learn of a status of receiving the first information by the network device.

According to a second aspect, an embodiment of this application provides a communication method. The method may be performed by a network device, or may be performed by a chip used in a network device. The following provides descriptions by using an example in which an execution body is the network device. The method includes: After receiving first information from a terminal device, the network device determines, based on the first information, a resource used for data transmission between the terminal device and the network device. The network device belongs to a second network. The first information includes first configuration information and/or first timing offset information. The first configuration information includes to-be-used gap GAP configuration information or to-be-used time division multiplexing TDM pattern configuration information of the terminal device. The first timing offset information includes a downlink timing offset between a first cell and a second cell. The first cell belongs to a first network, the second cell belongs to the second network, and a network device in the second network transmits data with the terminal device.

In a possible design, after the terminal device has reselected the first cell, the to-be-used GAP configuration information of the terminal device includes GAP configuration information used by the terminal device when the terminal device transmits data with the network device in the second network. After the terminal device has reselected the first cell, the to-be-used TDM pattern configuration information of the terminal device includes TDM pattern configuration information used by the terminal device when the terminal device transmits data with the network device in the second network.

In a possible design, if the first information is the first timing offset information, the communication method in this embodiment of this application further includes: The terminal device determines the first configuration information based on the first timing offset information. The first configuration information includes the to-be-used GAP configuration information or the to-be-used TDM pattern configuration information of the terminal device.

In a possible design, the communication method in this embodiment of this application further includes: The network device sends a first acknowledgment message to the terminal device, where the first acknowledgment message indicates that the network device has received the first information.

According to a third aspect, an embodiment of this application provides a communication apparatus, wherein the communication apparatus is a terminal device or a chip in a terminal device, which is configured to perform the communicaton method according to the first aspect or any embodiment of the first aspect.

According to a fourth aspect, an embodiment of this application provides a communication apparatus, wherein the communication apparatus is a network device or a chip in a network device, which is configured to perform the communicaton method according to the first aspect or any embodiment of the second aspect.

According to a fifth aspect, an embodiment of this application provides a computer-readable storage medium, wherein the computer-readable storage medium stores instructions, and when the instructions are run on a processing unit of a terminal device, the terminal device is enabled to perform the method according the first aspect or any embodiment of the first aspect, or when the instructions are run on a processing unit of a network device, the network device is enabled to perfom the method according to the second aspect or any embodiment of the second aspect.

### BRIEF DESCRIPTION OF DRAWINGS

FIG. 1 is a schematic diagram of a network architecture according to an embodiment of this application;
FIG. 2 is a schematic flowchart of a communication method according to an embodiment of this application;
FIG. 3 is a schematic flowchart of still another communication method according to an embodiment of this application;
FIG. 4 is a schematic flowchart of yet another communication method according to an embodiment of this application;
FIG. 5 is a schematic flowchart of yet another communication method according to an embodiment of this application;
FIG. 6 is a schematic flowchart of yet another communication method according to an embodiment of this application;
FIG. 7 is a schematic flowchart of yet another communication method according to an embodiment of this application;
FIG. 8 is a schematic flowchart of yet another communication method according to an embodiment of this application;
FIG. 9 is a schematic diagram of a structure of a communication apparatus according to an embodiment of this application; and
FIG. 10 is a schematic diagram of a structure of a communication apparatus according to an embodiment of this application.

### DESCRIPTION OF EMBODIMENTS

In the specification and accompanying drawings of this application, the terms "first", "second", and the like are intended to distinguish between different objects or distinguish between different processing of a same object, but do not indicate a particular order of the objects. In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example" or "for example" or the like is intended to present a relative concept in a specific manner.

First, technical terms used in a related technology are described.

### 1. Cell reselection (cell reselection)

For a terminal device in an idle (idle) mode, a process in which the terminal device selects, by monitoring signal quality of a neighboring cell and a current cell, a cell with best signal quality to provide a service signal is referred to as cell reselection. When the signal quality and a level of the neighboring cell meet a specific condition, the terminal device accesses and camps on the cell.

### 2. Cell handover (cell handover)

For a terminal device in a connected mode, when the terminal device moves from one cell to another cell, or due to a network reason, service load adjustment, a device fault, or the like, the terminal device may hand over from a source cell to a target cell, to ensure continuity of communication between the terminal device and a network device. The foregoing process is referred to as "cell handover".

A cell accessed before handover of the terminal device due to movement, a network reason, service load adjustment, a device fault, or the like is described as a "source cell". A cell accessed after handover of the terminal device due to movement, a network reason, service load adjustment, a device fault, or the like is described as a "target cell". A network device corresponding to the source cell is described as a "source network device", or may be described as a first network device. A network device corresponding to the target cell is described as a "target network device", or may be described as a second network device.

### 3. Multi-card type terminal device

A multi-card type terminal device may also be described as a "multi-card terminal", and is a terminal device equipped with a plurality of subscriber identity module (subscriber identification module, SIM) cards. A subscriber can use any SIM card for communication.

When two SIM cards are mounted on the terminal device, if the terminal device includes one radio frequency interface for receiving (Rx) and one radio frequency interface for transmitting (Tx), the terminal device can transmit data only with a network device in one network. If the terminal device includes two radio frequency interfaces for receiving (Rx) and two radio frequency interfaces for transmitting (Tx), the terminal device can simultaneously listen to paging (paging) messages of two networks, and separately transmit data with network devices in the two networks. If the terminal device includes two radio frequency interfaces for receiving (Rx) and one radio frequency interface for transmitting (Tx), it is very difficult for the terminal device to simultaneously transmit data in two networks, and the terminal device cannot receive a paging message of one of the two networks in time. For example, when the terminal device transmits data (for example, a voice service or map navigation) with a network device by using a SIM 1, the terminal device cannot receive a paging message through a SIM 2. Networks to which the SIM 1 and the SIM 2 belong may be a same operator network, or may be different operator networks.

To enable the terminal device to receive a paging message from a network device 2 when transmitting data with a network device 1 (for example, performing a voice service such as a voice conference, map navigation, or a bank hotline by using the network device 1), the terminal device determines configuration information based on a timing offset and a paging occasion (paging occasion, PO) between the network device 1 and the network device 2, and then sends the configuration information to the network device 1. The configuration information includes gap (gap) configuration information or time division multiplexing (time division multiplexing, TDM) pattern configuration information. If the terminal device includes one radio frequency interface for receiving, the network device 1 stops scheduling the terminal device on a transmission resource indicated by the configuration information, so that the terminal device may receive the paging message of the network device 2 on the transmission resource indicated by the configuration information. If the terminal device includes a plurality of radio frequency interfaces for receiving, the network device 1 reduces scheduling of some radio frequency interfaces for receiving on a transmission resource indicated by the configuration information, so that the terminal device receives the paging message of the network device 2 on the transmission resource indicated by the configuration information. The network device 1 and the network device 2 may belong to a same operator network, or may belong to different operator networks. Both the network device 1 and the network device 2 have their respective downlink timing, and the downlink timing of the network device 1 and the downlink timing of the network device 2 may be the same or different. A time unit of the downlink timing may be a hyper frame number, a frame number, a slot, a symbol, a second, a millisecond, a microsecond, a nanosecond, or the like. This is not limited in this embodiment of this application.

For the multi-card type terminal device, in a first network, the terminal device is in an idle mode, and listens to a paging message from a network device in the first network. In a second network, the terminal device is in a connected mode, and transmits data with a network device in the second network. Scenarios in the embodiments of this application are all such scenarios. In this scenario, "the terminal device performs cell reselection" means that the terminal device performs cell reselection in the first network. A cell reselected by the terminal device is described as a "first cell". "Cell before the terminal device reselects" is a cell on which the terminal device last camps before the terminal device reselects the first cell in the first network. "Cell handover performed by the terminal device" means that the terminal device performs cell handover in the second network. Herein, the first network and the second network may be a same network operator, or may be different network operators.

If the terminal device performs cell reselection in the first network, there is a high probability that downlink timing of the first cell reselected by the terminal device changes compared with downlink timing of the cell before reselection. If a difference between the downlink timing of the first cell and the downlink timing of the cell before reselection is large, the transmission resource used for data transmission and the transmission resource used for transmitting the paging message may overlap (for example, completely or partially overlap). Consequently, in a process of transmitting data with the network device in the second network, the terminal device cannot receive the paging message of the first network in time. Similarly, if the terminal device performs cell handover in the second network, and a difference between downlink timing of a source cell and downlink timing of a target cell is large, similarly, in a process of transmitting data with the network device in the second network, the terminal device cannot receive the paging message of the first network in time either.

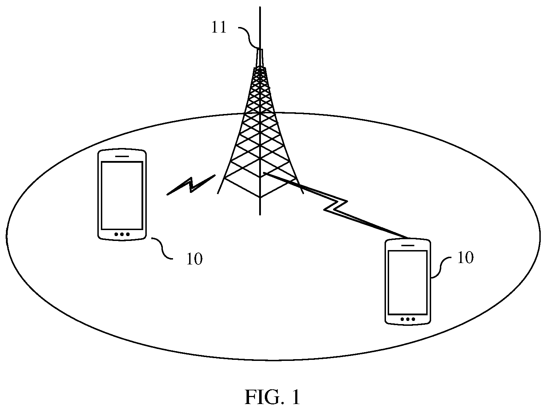

In view of this, embodiments of this application provide a communication method. The communication method in the embodiments of this application is applicable to various communication systems. The communication method provided in embodiments of this application may be applied to a long term evolution (long term evolution, LTE) system, a fifth-generation (fifth-generation, 5G) communication network, another similar network, or another future network. FIG. 1 is a schematic diagram of an architecture of a communication system to which the communication method according to embodiments of this application is applicable. The communication system may include a terminal device 10 and a network device 11. The terminal device 10 is wirelessly connected to the network device 11. There may be one or more terminal devices 10, and there may be one or more network devices 11. FIG. 1 shows only one network device and two terminal devices. In FIG. 1, one ellipse represents one cell. FIG. 1 is merely a schematic diagram, and does not constitute any limitation on an application scenario of the communication method in embodiments of this application.

The terminal device 10, also referred to as user equipment (user equipment, UE), a mobile station (mobile station, MS), a mobile terminal (mobile terminal, MT), or the like, is a device that provides a voice/data connectivity for a user, for example, a handheld device or a vehicle-mounted device having a wireless connection function. The terminal device may be specifically a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a future 5G communication network or a communication network after 5G, or the like. This is not limited in embodiments of this application.

The network device 11 is a device in a wireless communication network, for example, a radio access network (radio access network, RAN) node that connects the terminal device 10 to the wireless communication network. Currently, some RAN nodes are, for example, a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), a network side device in a future 5G communication network or a communication network after 5G, or the like.

The communication system and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as a network architecture evolves and a new service scenario emerges.

The following describes in detail the communication method provided in embodiments of this application.

It should be noted that in the following embodiments of this application, names of messages between network elements, names of parameters in messages, or the like are merely examples, and may be other names during specific implementation. This is uniformly described herein, and details are not described below again.

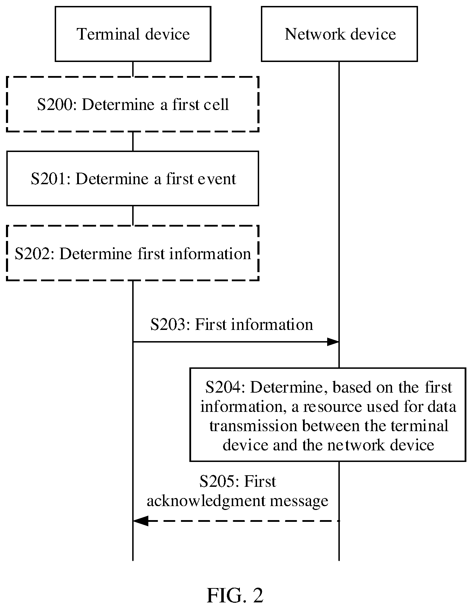

An embodiment of this application provides a communication method, and the communication method is applied to a cell reselection process. Refer to FIG. 2. The communication method includes the following steps.

S200: A terminal device determines a first cell.

The first cell belongs to a first network. The terminal device performs cell reselection in the first network, and the first cell is a cell reselected by the terminal device in the first network. There are a plurality of implementations of S200, which may be, for example, but are not limited to, the following manners.

Step 1: The terminal device obtains downlink timing of a cell before reselection.

Step 2: If the terminal device determines that there is a cell that has the same downlink timing as the cell before reselection, the terminal device uses, as the first cell, the cell that has the same downlink timing as the cell before reselection. Alternatively, the terminal device uses, as the first cell, a cell whose offset from the downlink timing of the cell before reselection is less than or equal to a first threshold.

In other words, when the terminal device determines that there is the cell that has the same downlink timing as the cell before reselection, the terminal device preferably uses, as the first cell, the cell that has the same downlink timing as the cell before reselection. When the terminal device determines that there is no cell that has the same downlink timing as the cell before reselection, the terminal device preferably uses, as the first cell, the cell whose offset from the downlink timing of the cell before reselection is less than or equal to the first threshold.

The first threshold may be a value configured by a network device in the first network, or may be a value configured by a network device in a second network.

In this way, when the terminal device performs cell reselection, the downlink timing of the cell before the terminal device reselects and downlink timing of a cell after the terminal device reselects can be the same or close to each other, to reduce a probability of paging message receiving failure caused by a downlink timing difference between cells.

S201: The terminal device determines a first event.

The first event includes any one of the following: The terminal device determines a target first cell, the terminal device determines to reselect a first cell, or the terminal device has reselected a first cell.

Herein, "the terminal device determines a target first cell" may mean a process in which the terminal device determines that a target cell is the first cell or may mean that after determining that a target cell is the first cell, the terminal device does not reselect the first cell.

"The terminal device determines to reselect a first cell" may mean that after determining that a target cell is the first cell, the terminal device is about to perform a reselection operation or is performing a reselection operation, but fails to camp on the first cell.

"The terminal device has reselected a first cell" may mean that the terminal device has successfully camped on the first cell.

S202: The terminal device determines first information.

Herein, "the terminal device determines first information" may mean that after the terminal device sends the first information to the network device in the second network, the network device in the second network can use the first information to obtain a resource used for data transmission between the network device in the second network and the terminal device, and the network device in the second network does not correct the first information. Alternatively, "the terminal device determines first information" may mean that after the terminal device recommends the first information to a network device in a second network, the network device in the second network uses the first information as auxiliary information or reference information, first corrects the first information, and obtains, based on the corrected first information, a resource for data transmission between the network device in the second network and the terminal device.

The first information has the following three cases.

Case 1: The first information includes first configuration information. The first configuration information includes to-be-used GAP configuration information or to-be-used TDM pattern configuration information of the terminal device. Herein, the to-be-used GAP configuration information of the terminal device is GAP configuration information used by the terminal device when the terminal device transmits data with the network device in the second network after the terminal device reselects the first cell. Herein, the to-be-used TDM pattern configuration information of the terminal device is TDM pattern configuration information used by the terminal device when the terminal device transmits data with the network device in the second network after the terminal device reselects the first cell. The first network and the second network may be a same network operator, or may be different network operators.

There are a plurality of manners of "the terminal device determines first configuration information", which may be, for example, but are not limited to the following seven manners.

Manner 1: The terminal device determines the first configuration information based on downlink timing of the first cell and downlink timing of a second cell.

The second cell belongs to the second network. In the second network, if the terminal device does not perform cell handover in a process of performing S201 or before performing S201, the second cell is a cell accessed by the terminal device when the terminal device transmits data with the network device in the second network. If the terminal device performs cell handover in a process of performing S201 or before performing S201, the second cell is a target cell after the terminal device hands over.

For example, the terminal device may determine a downlink timing offset between the first cell and the second cell based on the downlink timing of the first cell and the downlink timing of the second cell, and then determine the first configuration information based on a slot in which the terminal device needs to receive a paging message and/or system information in the first cell. For example, if the terminal device receives the paging message in a slot 4 of the first cell, and the downlink timing offset between the first cell and the second cell is "+1" slot, the terminal device may determine that the first configuration information (for example, the GAP configuration information used in the second cell) is a paging message received by the terminal device from a network device corresponding to the first cell in a slot 5, that is, at a moment of the slot 5 of the second cell. Determining of other TDM pattern configuration information is similar, and only a quantity of determined slots is different.

For example, the terminal device may alternatively determine a downlink timing offset between the first cell and the second cell based on the downlink timing of the first cell and the downlink timing of the second cell, and then adjust second configuration information by using the downlink timing offset between the first cell and the second cell, to determine the first configuration information. The second configuration information is GAP configuration information or TDM pattern configuration information used by the terminal device before the terminal device reselects the first cell.

In addition, the implementation of determining the first configuration information described in Manner 1 may also be used as a possible implementation of determining the first configuration information based on downlink timing in Manner 2 to Manner 7.

Manner 2: The terminal device determines the first configuration information based on downlink timing of a cell before reselection, downlink timing of the first cell, and downlink timing of a second cell.

For related descriptions of the second cell, refer to Manner 1. Details are not described herein again.

For example, the terminal device may determine a downlink timing offset 1 based on the downlink timing of the first cell and the downlink timing of the second cell, and the terminal device determines a downlink timing offset 2 based on the downlink timing of the cell before reselection and the downlink timing of the first cell. Then, the terminal device determines the first configuration information based on a slot in which the terminal device needs to receive a paging message and/or system information in the cell before reselection. For example, if the terminal device receives the paging message in a slot 4 of the cell before reselection, and the downlink timing offset 1 and the downlink timing offset 2 are "+1" slots, the terminal device may determine that the first configuration information (for example, the GAP configuration information used in the second cell) is a paging message received by the terminal device from a network device corresponding to the first cell in a slot 6, that is, at a moment of the slot 6 of the second cell. Determining of other TDM pattern configuration information is similar, and only a quantity of determined slots is different. Alternatively, refer to Manner 7 or examples in Manner 7.

Manner 3: The terminal device determines the first configuration information based on downlink timing of a cell before reselection, downlink timing of the first cell, downlink timing of a second cell, and second configuration information.

For related descriptions of the second configuration information and the second cell, refer to Manner 1. Details are not described herein again. For a specific example, refer to Manner 7 or examples in Manner 7.

Manner 4: The terminal device determines the first configuration information based on downlink timing offset information between the first cell and a second cell.

For related descriptions of the second cell, refer to Manner 1. Details are not described herein again.

For example, if the terminal device receives a paging message in a slot 4 of the first cell, and a downlink timing offset between the first cell and the second cell is "+1" slot, the terminal device may determine that the first configuration information (for example, the GAP configuration information used in the second cell) is a paging message received by the terminal device from a network device corresponding to the first cell in a slot 5, that is, at a moment of the slot 5 of the second cell.

Alternatively, the terminal device adjusts second configuration information by using the downlink timing offset between the first cell and the second cell, to determine the first configuration information. The second configuration information is GAP configuration information or TDM pattern configuration information used by the terminal device before the terminal device reselects the first cell. Alternatively, refer to Manner 7 or examples in Manner 7.

Manner 5: The terminal device determines the first configuration information based on downlink timing offset information between the first cell and a second cell and downlink timing offset information between the second cell and a cell before reselection.

For related descriptions of the second cell, refer to Manner 1. Details are not described herein again. For a specific example, refer to Manner 7 or examples in Manner 7.

Manner 6: The terminal device determines the first configuration information based on downlink timing offset information between the first cell and a second cell and second configuration information.

For related descriptions of the second configuration information and the second cell, refer to Manner 1. Details are not described herein again. For a specific example, refer to Manner 7 or examples in Manner 7.

Manner 7: The terminal device determines the first configuration information based on downlink timing offset information between the first cell and a second cell, downlink timing offset information between the second cell and a cell before reselection, and second configuration information.

For example, the terminal device determines, based on downlink timing of a cell before reselection and downlink timing of the second cell, that a downlink timing offset 1 is 20 ms. The terminal device determines, based on downlink timing of the first cell and the downlink timing of the second cell, that a downlink timing offset 2 is 100 ms. The terminal device then determines the first configuration information based on the two downlink timing offsets (that is, 20 ms and 100 ms) and the second configuration information.

For related descriptions of the second configuration information and the second cell, refer to Manner 1. Details are not described herein again.

Optionally, when a specific condition is met, the terminal device determines the first configuration information. Herein, a condition for determining the first configuration information by the terminal device is denoted as a "condition 1", and the condition 1 includes at least one of the following:
First, the terminal device has camped on the first cell.

Second, the downlink timing of the cell before the terminal device reselects is different from the downlink timing of the first cell.

Third, a downlink timing offset between the downlink timing of the cell before the terminal device reselects and the downlink timing of the first cell is greater than a first threshold.

Fourth, a network device to which the cell before the terminal device reselects belongs is different from a network device to which the first cell belongs.

In this way, the terminal device can determine the first configuration information only when the specific condition is met, to prevent the terminal device from frequently updating the first configuration information, and also prevent the terminal device from frequently sending the first configuration information to the network device in the second network. This can save air interface resources.

Case 2: The first information includes first timing offset information. The first timing offset information includes a downlink timing offset between the first cell and a second cell. Herein, for related descriptions of the second cell, refer to Manner 1. Details are not described herein again. The first timing offset information is determined by the terminal device based on downlink timing of the first cell and downlink timing of the second cell.

Optionally, when a specific condition is met, the terminal device determines the first timing offset information. Herein, a condition for determining the first timing offset information by the terminal device is denoted as a "condition 2", and the condition 2 includes at least one of the following:
First, the terminal device has camped on the first cell.

Second, downlink timing of a cell before the terminal device reselects is different from the downlink timing of the first cell.

Third, a network device to which the cell before the terminal device reselects belongs is different from a network device to which the first cell belongs.

In this way, the terminal device can determine the first timing offset information only when the specific condition is met, to prevent the terminal device from frequently updating first timing offset information, and also prevent the terminal device from frequently sending the first timing offset information to the network device in the second network. This can save air interface resources.

Further, after the terminal device determines the first timing offset information, the terminal device determines the first configuration information based on the first timing offset information. For example, the terminal device adjusts second configuration information based on the first timing offset information to obtain the first configuration information.

In this way, the terminal device can obtain the first configuration information based on the first timing offset information, so that after reselecting the first cell, the terminal device transmits data with the network device in the second network by using the first configuration information. This can ensure that the terminal device receives a paging message from a network device in the first network in time.

Case 3: The first information includes first configuration information and first timing offset information. For the first configuration information, refer to related descriptions in Case 1. For the first timing offset information, refer to related descriptions in Case 2. Details are not described herein again.

S203: The terminal device sends the first information to a network device. Correspondingly, the network device receives the first information from the terminal device.

The network device belongs to the second network. The network device in the second network transmits data with the terminal device.

S204: The network device determines, based on the first information, a resource used for data transmission between the terminal device and the network device.

For example, if the first information includes the first configuration information, the network device determines, based on the first configuration information, a resource used for data transmission between the terminal device and the network device, for example, a time domain resource used for data transmission between the terminal device and the network device. Herein, when the terminal device determines the first configuration information, the network device does not adjust the first configuration information, but determines, based on the first configuration information from the terminal device, a resource used for data transmission between the terminal device and the network device. When the terminal device recommends the first configuration information, the network device may first adjust the first configuration information from the terminal device, and then determine, based on adjusted first configuration information, a resource used for data transmission between the terminal device and the network device.

If the first information includes the first timing offset information, the network device determines the first configuration information based on the first timing offset information. For example, the network device adjusts the second configuration information by using the first timing offset information, to obtain the first configuration information, so that the network device transmits data with the terminal device that reselects the first cell. This can also ensure that the terminal device receives the paging message from the network device in the first network in time. Herein, similarly, when the terminal device determines the first timing offset information, the network device does not adjust the first timing offset information, but determines, based on the first timing offset information from the terminal device, a resource used for data transmission between the terminal device and the network device. When the terminal device recommends the first timing offset information, the network device may first adjust the first timing offset information from the terminal device, and then determine, based on adjusted first timing offset information, a resource used for data transmission between the terminal device and the network device.

S205: The network device sends a first acknowledgment message to the terminal device. Correspondingly, the terminal device receives the first acknowledgment message from the network device.

The first acknowledgment message indicates that the network device has received the first information.

It should be noted that the network device may first perform S204, and then perform S205. Alternatively, the network device may first perform S205, and then perform S204. Alternatively, the network device may simultaneously perform S204 and S205. A sequence of performing S204 and S205 is not limited in this embodiment of this application.

According to the communication method provided in this embodiment of this application, when the terminal device determines a target first cell, the terminal device determines to reselect the first cell, or the terminal device has reselected the first cell, the terminal device can update the first configuration information in time, so that the network device in the second network can obtain the updated first configuration information in time. Therefore, after reselecting the first cell, in a process of transmitting data with the network device in the second network, the terminal device can still receive the paging message from the network device in the first network in time. This can avoid "paging message receiving failure" caused by configuration information not being updated in the conventional technology in time. Alternatively, when the terminal device determines the target first cell, the terminal device determines to reselect the first cell, or the terminal device has reselected the first cell, the terminal device and the network device in the second network can obtain the updated first timing offset information in time, and can determine the first configuration information based on the first timing offset information. This can also avoid "paging message receiving failure" caused by configuration information not being updated in the conventional technology in time.

An embodiment of this application provides another communication method, and the communication method is applied to a cell handover process. In a cell handover scenario, a terminal device, a source network device, and a target network device are mainly involved. First configuration information may be determined by any one of the terminal device, the source network device, and the target network device. The following uses three examples for description.

Example 1: The terminal device determines the first configuration information.

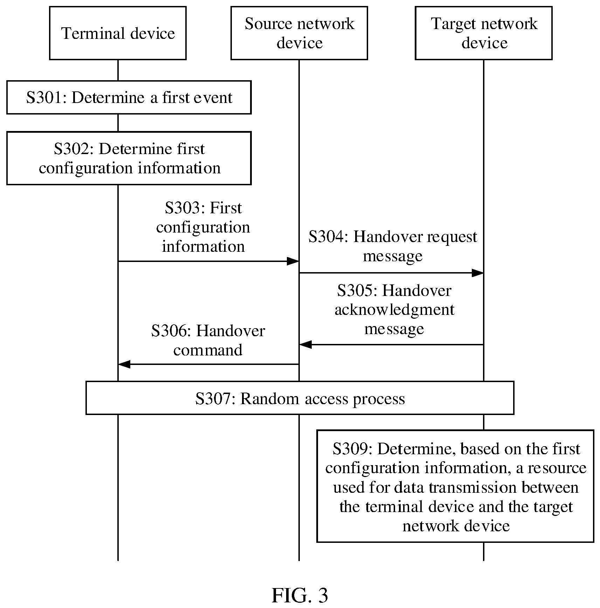

Refer to FIG. 3, FIG. 4, or FIG. 5. The communication method in this embodiment of this application includes the following steps.

S301: The terminal device determines a first event.

The first event includes any one of the following: The terminal device determines a target cell to which the terminal device is to hand over, or the terminal device hands over to a target cell. The target cell belongs to a second network.

Herein, "the terminal device determines a target cell to which the terminal device is to hand over" may mean that the terminal device has determined a potential target cell but has not handed over to the target cell. Alternatively, the terminal device has determined a target cell to which the terminal device is to hand over, but has not handed over to the target cell. The "potential target cell" is determined by the terminal device based on information such as reference signal received quality of a neighboring cell, and may be one or more of neighboring cells in a measurement report. "The terminal device hands over to a target cell" may mean that the terminal device has handed over to the target cell.

S302: The terminal device determines first configuration information.

The first configuration information includes GAP configuration information or TDM pattern configuration information used by the terminal device after the terminal device hands over to the target cell. In other words, the first configuration information is GAP configuration information or TDM pattern configuration information used by the terminal device when the terminal device transmits data with a target network device in the second network after the terminal device hands over to the target cell.

Herein, "the terminal device determines first configuration information" may mean that after the target network device obtains the first configuration information, the target network device can use the first configuration information to obtain a resource used for data transmission between the target network device and the terminal device, and the target network device does not correct the first configuration information. Alternatively, "the terminal device determines first configuration information" may mean that after the terminal device recommends the first configuration information to the target network device in the second network, the target network device uses the first configuration information as auxiliary information or reference information, may first correct the first configuration information, and obtains, based on corrected first configuration information, a resource used for data transmission between the target network device and the terminal device.

There may be a plurality of specific implementation processes of "the terminal device determines first configuration information". There are mainly the following two scenarios based on "whether the terminal device performs cell reselection in a first network".

Scenario 1: In a process of performing S301 or before performing S301, the terminal device does not perform cell reselection in the first network, that is, a cell on which the terminal device camps in the first network does not change. In this scenario, a specific implementation process of S302 may be, for example, but is not limited to, the following 10 manners.

Manner 1: The terminal device determines the first configuration information based on downlink timing of the cell on which the terminal device camps in the first network and downlink timing of the target cell.

Herein, when knowing the downlink timing of the cell on which the terminal device camps in the first network and the downlink timing of the target cell in the second network, the terminal device may determine the first configuration information, so that the terminal device can not only transmit data with the network device in the second network, but also receive a paging message from a network device in the first network in time.

For example, the terminal device may determine a downlink timing offset 1 based on the downlink timing of the cell on which the terminal device camps in the first network and the downlink timing of the target cell, and then determines the first configuration information based on a slot in which the cell on which the terminal device camps in the first network needs to receive a paging message and/or system information. For example, if the terminal device receives the paging message in a slot 4 of the cell on which the terminal device camps in the first network, and the downlink timing offset 1 is "+1" slot, the terminal device may determine that the first configuration information (for example, the GAP configuration information used in the target cell) is a paging message received by the terminal device from a network device in the first network in a slot 5, that is, at a moment of the slot 5 of the target cell. Determining of other TDM pattern configuration information is similar, and only a quantity of determined slots is different.

For example, the terminal device may alternatively determine a downlink timing offset 1 based on the downlink timing of the cell on which the terminal device camps in the first network and the downlink timing of the target cell, and then adjust second configuration information by using the downlink timing offset 1, to determine the first configuration information. The second configuration information is GAP configuration information or TDM pattern configuration information used by the terminal device in a source cell.

In addition, the implementation of determining the first configuration information described in Manner 1 may also be used as a possible implementation of determining the first configuration information based on downlink timing in Manner 2 to Manner 10.

Manner 2: The terminal device determines the first configuration information based on downlink timing of a source cell and downlink timing of the target cell.

The source cell and the target cell belong to a second network.

For example, if a downlink timing offset between the cell on which the terminal device camps in the first network and the source cell in the second network is known, the terminal device may determine, based on the downlink timing of the source cell in the second network, downlink timing of the cell on which the terminal device camps in the first network. In this way, the terminal device may determine the first configuration information based on the downlink timing of the cell on which the terminal device camps in the first network and the downlink timing of the target cell in the second network.

Manner 3: The terminal device determines the first configuration information based on downlink timing of a source cell, downlink timing of the target cell, and downlink timing of the cell on which the terminal device camps in the first network.

For example, the terminal device may determine a downlink timing offset 1 based on the downlink timing of the source cell and the downlink timing of the target cell, and determine a downlink timing offset 2 based on the downlink timing of the cell on which the terminal device camps in the first network and the downlink timing of the source cell, and then determines the first configuration information based on a slot in which the cell on which the terminal device camps in the first network needs to receive a paging message and/or system information. For example, if the terminal device receives the paging message in a slot 4 of the cell on which the terminal device camps in the first network, and the downlink timing offset 1 and the downlink timing offset 2 are "+1" slots, the terminal device may determine that the first configuration information (for example, the GAP configuration information used in the target cell) is a paging message received by the terminal device from a network device in the first network in a slot 6, that is, at a moment of the slot 6 of the target cell. Determining of other TDM pattern configuration information is similar, and only a quantity of determined slots is different.

Manner 4: The terminal device determines the first configuration information based on downlink timing of a source cell, downlink timing of the target cell, and second configuration information.

The second configuration information is GAP configuration information or TDM pattern configuration information used by the terminal device in the source cell.

For example, the terminal device obtains a downlink timing offset between the source cell and the target cell based on the downlink timing of the source cell and the downlink timing of the target cell, and then adjusts the second configuration information based on the downlink timing offset between the source cell and the target cell, to obtain the first configuration information.

Manner 5: The terminal device determines the first configuration information based on downlink timing of a source cell, downlink timing of the target cell, downlink timing of a second cell, and second configuration information.

The second cell is a serving cell on which the terminal device camps when the terminal device does not perform cell reselection in the first network.

For example, the terminal device determines a timing offset adjustment amount based on the downlink timing of the source cell, the downlink timing of the target cell, and the downlink timing of the second cell, and then adjusts the second configuration information based on the obtained timing offset adjustment amount, to obtain the first configuration information.

Manner 6: The terminal device determines the first configuration information based on downlink timing offset information between a source cell and the target cell. Herein, for a specific example, refer to Manner 3 or examples in Manner 3.

Manner 7: The terminal device determines the first configuration information based on downlink timing offset information between the cell on which the terminal device camps in the first network and the target cell.

For example, the terminal device adjusts second configuration information based on the downlink timing offset information between the cell on which the terminal device camps in the first network and the target cell, to obtain the first configuration information.

Manner 8: The terminal device determines the first configuration information based on downlink timing offset information between a second cell and a source cell and downlink timing offset information between the second cell and the target cell.

For a description of the second cell, refer to related descriptions in Manner 5. Details are not described herein again. For a specific example, refer to Manner 10 or examples in Manner 10.

Manner 9: The terminal device determines the first configuration information based on downlink timing offset information between a source cell and the target cell and second configuration information.

For example, the terminal device adjusts the second configuration information based on the downlink timing offset information between the source cell and the target cell, to obtain the first configuration information. For a description of the second configuration information, refer to related descriptions in Manner 4. Details are not described herein again.

Manner 10: The terminal device determines the first configuration information based on downlink timing offset information between a second cell and a source cell, downlink timing offset information between the second cell and the target cell, and second configuration information.

For a description of the second configuration information, refer to related descriptions in Manner 4. For a description of the second cell, refer to related descriptions in Manner 5. Details are not described herein again.

For example, a downlink timing offset 1 between the second cell and the source cell is 20 ms, and a downlink timing offset 2 between the second cell and the target cell is 100 ms. The terminal device then determines the first configuration information based on the two downlink timing offsets (that is, the downlink timing offset 1 and the downlink timing offset 2) and the second configuration information.

Optionally, in the scenario 1, if a specific condition is met, the terminal device determines the first configuration information. Herein, a condition for determining the first configuration information by the terminal device is denoted as a "condition 3", and the condition 3 includes at least one of the following:
First, the downlink timing of the source cell is different from the downlink timing of the target cell.
Second, a downlink timing offset between the downlink timing of the source cell and the downlink timing of the target cell is greater than a first threshold. The first threshold may be a value configured by the network device in the first network, or may be a value configured by the source network device or the target network device in the second network.
Third, a network device to which the source cell belongs is different from a network device to which the target cell belongs.

In this way, the terminal device can determine the first configuration information only when at least one of the conditions 3 is met, to prevent the terminal device from frequently updating the first configuration information, and also prevent the terminal device from frequently sending the first configuration information to the network device in the second network. This can save air interface resources.

Scenario 2: In a process of performing S301 or before performing S301, the terminal device performs cell reselection in the first network, and reselects the first cell. In this scenario, a specific implementation process of S302 may be, for example, but is not limited to, the following manners.

The terminal device determines the first configuration information based on downlink timing of a first cell and downlink timing of the target cell.

Herein, when knowing the downlink timing of the first cell reselected by the terminal device in the first network and the downlink timing of the target cell in the second network, the terminal device may determine the first configuration information, so that the terminal device can not only transmit data with the target network device in the second network, but also receive a paging message from a network device in the first network in time.

Optionally, in the scenario 2, if a specific condition is met, the terminal device determines the first configuration information. Herein, a condition for determining the first configuration information by the terminal device is denoted as a "condition 4", and the condition 4 includes at least one of the following:
First, the downlink timing of the first cell is different from the downlink timing of the target cell.
Second, a downlink timing offset between the downlink timing of the first cell and the downlink timing of the target cell is greater than the first threshold.
Third, a network device to which the first cell belongs is different from the network device to which the target cell belongs.

In this way, the terminal device can determine the first configuration information only when at least one of the conditions 4 is met, to prevent the terminal device from frequently updating the first configuration information, and also prevent the terminal device from frequently sending the first configuration information to the network device in the second network. This can save air interface resources.

It should be noted that before the terminal device performs S302, because the terminal device does not perform S306, in other words, the terminal device does not receive a handover command from the source network device, the "target cell" in related descriptions of S302 is a "potential target cell", that is, a cell determined by the terminal device based on information such as reference signal received quality of a neighboring cell.

Before the terminal device performs S302, if S306 is not performed, after the terminal device determines the first configuration information, the terminal device may transmit the first configuration information to the target network device in two transmission paths. The following describes the two transmission paths of the first configuration information.

In the first transmission path, referring to FIG. 3, the terminal device transmits the first configuration information to the target network device by using the source network device, that is, the terminal device performs S303 after performing S302.

S303: The terminal device sends the first configuration information to the source network device. Correspondingly, the source network device receives the first configuration information from the terminal device.

The first configuration information may be carried in a measurement report, or may be carried in another message, to be transmitted from the terminal device to the source network device.

Optionally, after the source network device acknowledges receiving the first configuration information, the source network device sends a first acknowledgment message to the terminal device. Correspondingly, the terminal device receives the first acknowledgment message from the source network device. The first acknowledgment message indicates that the source network device has received the first configuration information.

S304: The source network device sends a handover request message to the target network device. Correspondingly, the target network device receives the handover request message from the source network device.

A process in which the source network device determines the target cell and the target network device is as follows: The terminal device sends a measurement report to the source network device. Correspondingly, the source network device receives the measurement report from the terminal device. The measurement report includes information such as reference signal received quality of the source cell and the reference signal received quality of the neighboring cell. The source network device determines, based on the measurement report, the target cell to which the terminal device is to hand over and a target network device corresponding to the target cell.

Herein, the source network device and the target network device belong to the second network. The handover request message requests to hand over the terminal device to the target network device. When the source network device does not perform S303, the handover request message does not include the first configuration information. When the source network device performs S303, the handover request message further includes the first configuration information. After obtaining the first configuration information, the target network device performs S309 based on the first configuration information.

S305: The target network device sends a handover acknowledgment message to the source network device. Correspondingly, the source network device receives the handover acknowledgment message from the target network device.

The handover acknowledgment message acknowledges handing over the terminal device to the target network device.

S306: The source network device sends a handover command to the terminal device. Correspondingly, the terminal device receives the handover command from the source network device.

The handover command includes indication information. The indication information indicates a target cell to which the terminal device is to hand over.

S307: The terminal device performs a random access process with the target network device in response to the handover command.

For a specific implementation process of the random access (random access, RA) process, refer to the conventional technology. Details are not described herein.

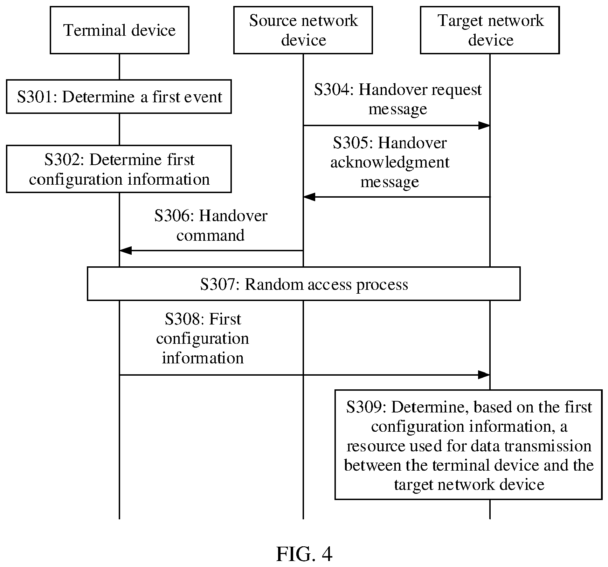

In the second transmission path, referring to FIG. 4, the terminal device sends the first configuration information to the target network device. To be specific, after performing S302, the terminal device does not perform S303, but performs S308.

S308: The terminal device sends the first configuration information to the target network device. Correspondingly, the target network device receives the first configuration information from the terminal device.

Optionally, after the target network device acknowledges receiving the first configuration information, the target network device sends a first acknowledgment message to the terminal device. Correspondingly, the terminal device receives the first acknowledgment message from the target network device. The first acknowledgment message indicates that the target network device has received the first configuration information. After receiving the first configuration information from the terminal device, the target network device performs S309 based on the first configuration information.

S309: The target network device determines, based on the first configuration information, a resource used for data transmission between the terminal device and the target network device.

For example, the target network device determines, based on the first configuration information, a time domain resource used for data transmission between the target network device and the terminal device. Herein, when the terminal device determines the first configuration information, the network device does not adjust the first configuration information, but determines, based on the first configuration information from the terminal device, a resource used for data transmission between the terminal device and the network device. When the terminal device recommends the first configuration information, the network device may first adjust the first configuration information from the terminal device, and then determine, based on adjusted first configuration information, a resource used for data transmission between the terminal device and the network device.

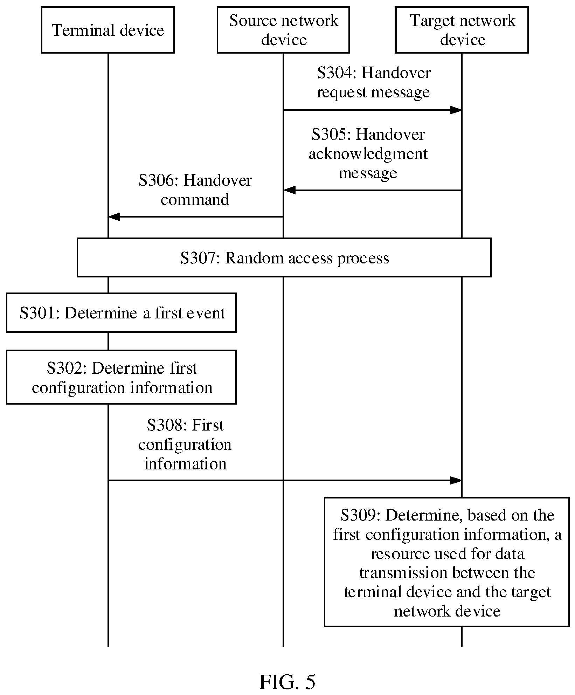

It should be noted that in the transmission path of "the terminal device sends the first configuration information to the target network device", the terminal device may alternatively perform S301 and S302 after performing S306, as shown in FIG. 5. In this case, the "target cell" in related descriptions of S302 is the target cell indicated by the handover command. After performing S306, the terminal device may first perform S307, and then perform S301 and S302. Alternatively, the terminal device may first perform S301 and S302, and then perform S307. Alternatively, the terminal device may simultaneously perform S301 and S307 or simultaneously perform S302 and S307. This is not limited in this embodiment of this application. In addition, S308 may be performed in a process of performing S307. To be specific, the terminal device transmits the first configuration information to the target network device in a process of performing random access. S308 may alternatively be independent of S307, that is, the terminal device performs S308 after performing S307. This is not limited in embodiments of this application.

According to the communication method provided in this embodiment of this application, when the terminal device determines the target cell to which the terminal device is to hand over, or the terminal device determines to hand over to the target cell, the terminal device can update the first configuration information in time, so that the target network device in the second network can obtain the updated first configuration information in time. Therefore, after handing over to the target cell, in a process of transmitting data with the target network device in the second network, the terminal device can still receive the paging message from the network device in the first network in time. This can avoid "paging message receiving failure" caused by configuration information not being updated in the conventional technology in time.

Example 2: The source network device determines the first configuration information.

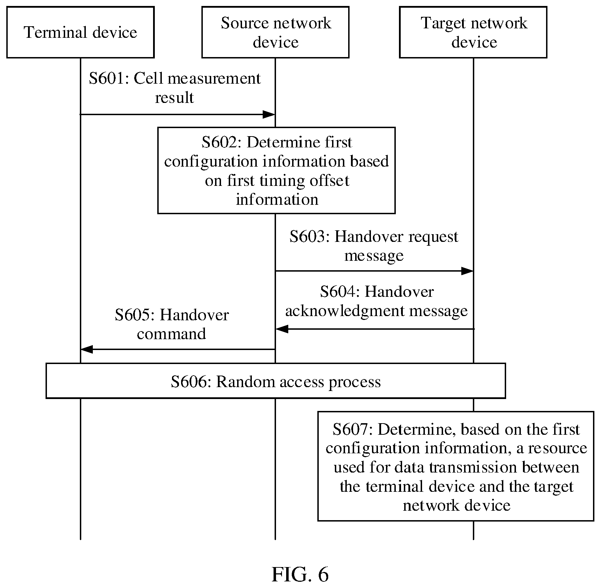

Refer to FIG. 6. The communication method in this embodiment of this application includes the following steps.

S601: The terminal device sends a cell measurement result to the source network device. Correspondingly, the source network device receives the cell measurement result from the terminal device.

The source network device belongs to a second network. The cell measurement result includes information such as reference signal received quality of a source cell, reference signal received quality of a neighboring cell, and timing offset information between cells. Herein, the cell measurement result may be carried in a measurement report. "Timing offset information between cells" includes at least one of the following:
first, downlink timing offset information between the source cell and each neighboring cell;
second, downlink timing offset information between a cell on which the terminal device camps in a first network and each neighboring cell; and
third, downlink timing offset information between a first cell reselected by the terminal device in a first network and each neighboring cell.

It may be understood that the neighboring cell in the measurement report includes a potential target cell. Therefore, "timing offset information between cells" may also include at least one of the following:
first, downlink timing offset information between the source cell and each potential target cell;
second, downlink timing offset information between a cell on which the terminal device camps in a first network and each potential target cell; and
third, downlink timing offset information between a first cell reselected by the terminal device in a first network and each potential target cell.

The source network device determines, based on the measurement report, the target cell to which the terminal device is to hand over, a target network device corresponding to the target cell, and first timing offset information. Herein, if the terminal device does not perform cell reselection in the first network before performing S601, the first timing offset information includes a downlink timing offset between the source cell and a target cell, or a downlink timing offset between a cell on which the terminal device camps in the first network and the target cell. If the terminal device performs cell reselection in the first network before performing S601, the first timing offset information includes a downlink timing offset between the first cell and a target cell.

S602: The source network device determines the first configuration information based on the first timing offset information.

The first configuration information includes GAP configuration information or TDM pattern configuration information used by the terminal device after the terminal device hands over to the target cell.

Herein, when the terminal device determines the first timing offset information, the source network device does not adjust the first timing offset information, but determines, based on the first timing offset information from the terminal device, the first timing offset information. When the terminal device recommends the first timing offset information, the source network device may first adjust the first timing offset information from the terminal device, and then determine, based on adjusted first timing offset information, the first timing offset information.

If the terminal device does not perform cell reselection in the first network, the source network device determines the first configuration information based on the downlink timing offset between the source cell and the target cell, or the downlink timing offset between the cell on which the terminal device camps in the first network and the target cell. If the terminal device reselects the first cell in the first network, the source network device determines the first configuration information based on the downlink timing offset between the first cell reselected by the terminal device in the first network and the target cell.

Optionally, in a process of determining the first configuration information, the source network device may also determine the first configuration information based on second configuration information. For a description of the second configuration information, refer to related descriptions in Manner 4 in S302. For a specific process of determining the first configuration information based on the second configuration information, refer to related descriptions in Manner 4, Manner 5, Manner 9, or Manner 10 in S302. Details are not described herein again.

S603: The source network device sends a handover request message to the target network device. Correspondingly, the target network device receives the handover request message from the source network device.

The handover request message requests to hand over the terminal device to the target network device. Herein, the handover request message further includes the first configuration information. After obtaining the first configuration information, the target network device performs S607 based on the first configuration information.

S604: The target network device sends a handover acknowledgment message to the source network device. Correspondingly, the source network device receives the handover acknowledgment message from the target network device.

The handover acknowledgment message acknowledges handing over the terminal device to the target network device.

S605: The source network device sends a handover command to the terminal device. Correspondingly, the terminal device receives the handover command from the network device.

The handover command includes indication information and first configuration information. The indication information indicates a target cell to which the terminal device is to hand over. The first configuration information is used by the terminal device to determine a resource used for data transmission between the terminal device and the target network device.

S606: The terminal device performs a random access process with the target network device in response to the handover command.

For a specific implementation process of the random access process, refer to the conventional technology. Details are not described herein.

S607: The target network device determines, based on the first configuration information, a resource used for data transmission between the terminal device and the network device.

For a specific implementation process of S607, refer to related descriptions of S309. Details are not described herein again.

According to the communication method provided in this embodiment of this application, when the terminal device determines the target cell to which the terminal device is to hand over, or the terminal device determines to hand over to the target cell, the source network device in the second network obtains updated first timing offset information in time, determines new first configuration information, and transmits the new first configuration information to the target network device. Therefore, after handing over to the target cell, in a process of transmitting data with the target network device in the second network, the terminal device can still receive the paging message from the network device in the first network in time. This can avoid "paging message receiving failure" caused by configuration information not being updated in the conventional technology in time.

Example 3: The target network device determines the first configuration information.

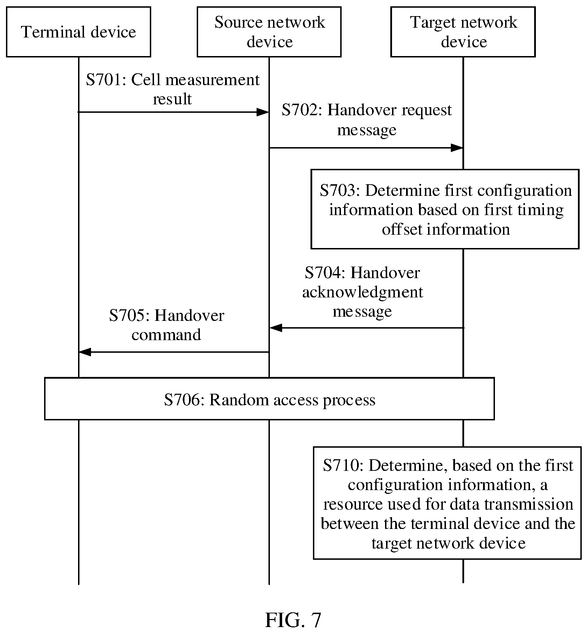

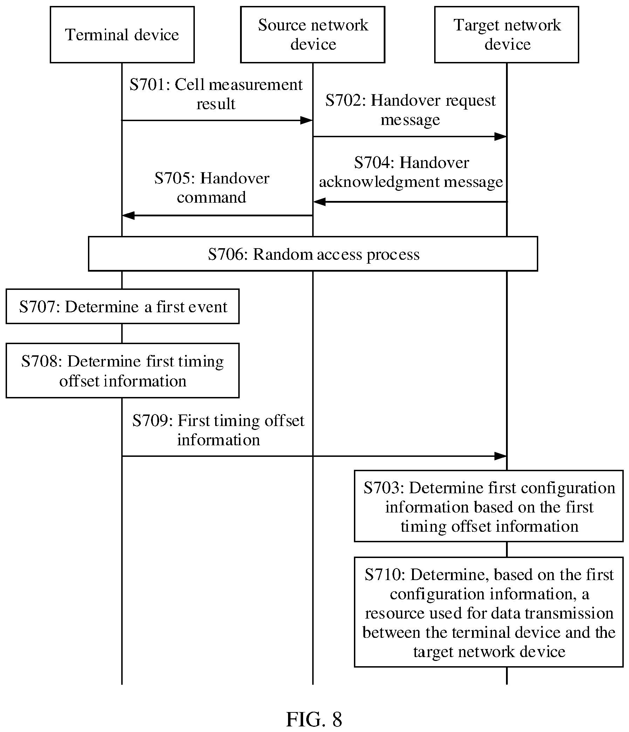

Refer to FIG. 7 or FIG. 8. The communication method in this embodiment of this application includes the following steps.

S701: The terminal device sends a cell measurement result to the source network device. Correspondingly, the source network device receives the cell measurement result from the terminal device.

For a specific implementation process of S701, refer to related descriptions of S601. Details are not described herein again.

In a first possible implementation, referring to FIG. 7, when the measurement report includes "timing offset information between cells", the source network device transmits determined first timing offset information to the target network device, so that the target network device determines the first configuration information. That is, the source network device performs S702.

S702: The source network device sends a handover request message to the target network device. Correspondingly, the target network device receives the handover request message from the source network device.

The handover request message requests to hand over the terminal device to the target network device. Herein, when the measurement report includes "timing offset information between cells", the first timing offset information is carried in the handover request message, to be transmitted from the source network device to the target network device. In addition, when the measurement report does not include "timing offset information between cells", the handover request message does not include the first timing offset information.

Optionally, the handover request message further includes second configuration information, and the second configuration information is used by the target network device to determine the first configuration information.

S703: The target network device determines the first configuration information based on the first timing offset information.

For a specific implementation process of S703, refer to related descriptions of S602. Details are not described herein again.

S704: The target network device sends a handover acknowledgment message to the source network device. Correspondingly, the source network device receives the handover acknowledgment message from the target network device.

The handover acknowledgment message acknowledges handing over the terminal device to the target network device. When the target network device performs S703, the handover acknowledgment message further includes the first configuration information.

S705: The source network device sends a handover command to the terminal device. Correspondingly, the terminal device receives the handover command from the network device.

The handover command includes indication information. The indication information indicates a target cell to which the terminal device is to hand over. When the handover acknowledgment message includes the first configuration information, the handover command further includes the first configuration information. The first configuration information is used by the terminal device to determine a resource used for data transmission between the terminal device and the target network device.

S706: The terminal device performs a random access process with the target network device in response to the handover command.

For a specific implementation process of the random access process, refer to the conventional technology. Details are not described herein. After the random access process between the terminal device and the target network device ends, the target network device performs S710.

In a second possible implementation, referring to FIG. 8, when the measurement report does not include "timing offset information between cells", the handover command does not include the first configuration information, and the terminal device performs S707.

S707: The terminal device determines a first event.

For a specific implementation process of S707, refer to related descriptions of S301. Details are not described herein again.

S708: The terminal device determines first timing offset information.

The first timing offset information includes a downlink timing offset between a source cell and the target cell, includes a downlink timing offset between a cell on which the terminal device camps in a first network and the target cell, or includes a downlink timing offset between a first cell reselected by the terminal device in the first network and the target cell.

Herein, if the terminal device does not perform cell reselection in the first network, the first timing offset information includes the downlink timing offset between the source cell and the target cell, or the downlink timing offset between the cell on which the terminal device camps in the first network and the target cell. If the terminal device reselects the first cell in the first network, the first timing offset information includes the downlink timing offset between the first cell reselected by the terminal device in the first network and the target cell.

Herein, "the terminal device determines first timing offset information" may mean that after the target network device obtains the first timing offset information, the target network device can use the first timing offset information to obtain a resource used for data transmission between the target network device and the terminal device, and the target network device does not correct the first timing offset information. Alternatively, "the terminal device determines the first timing offset information" may mean that after the terminal device recommends the first timing offset information to the target network device in the second network, the target network device uses the first timing offset information as auxiliary information or reference information, may first correct the first timing offset information, and obtains, based on corrected first timing offset information, a resource used for data transmission between the target network device and the terminal device.

There are a plurality of manners of "the terminal device determines first timing offset information", which may be, for example, but are not limited to the following three manners.

Manner 1: The terminal device determines the first timing offset information based on downlink timing of the source cell and downlink timing of the target cell.

Manner 2: The terminal device determines the first timing offset information based on downlink timing of the cell on which the terminal device camps in the first network and downlink timing of the target cell.

Manner 3: The terminal device determines the first timing offset information based on downlink timing of the first cell and downlink timing of the target cell.

Optionally, when the specific condition is met, the terminal device determines the first timing offset information. Herein, a condition for determining the first timing offset information by the terminal device is denoted as a "condition 5", and the condition 5 includes at least one of the following:
First, the downlink timing of the source cell is different from the downlink timing of the target cell.
Second, a network device to which the source cell belongs is different from a network device to which the target cell belongs.
Third, the downlink timing of the first cell is different from the downlink timing of the target cell.
Fourth, a network device to which the first cell belongs is different from the network device to which the target cell belongs.

In this way, the terminal device can determine the first timing offset information only when at least one of the conditions 5 is met, to prevent the terminal device from frequently updating first timing offset information, and also prevent the terminal device from frequently sending the first timing offset information to the target network device in the second network. This can save air interface resources.

Optionally, after the terminal device determines the first timing offset information, the terminal device determines the first configuration information based on the first timing offset information. For example, the terminal device adjusts second configuration information based on the first timing offset information to obtain the first configuration information.

In this way, the terminal device can obtain the first configuration information based on the first timing offset information, so that after handing over to the target cell, the terminal device can transmit data with the target network device by using the first configuration information, and the terminal device can receive the paging message from the network device in the first network in time by using the first configuration information. This can improve a success rate of receiving the paging message.

S709: The terminal device sends the first timing offset information to the target network device. Correspondingly, the target network device receives the first timing offset information from the terminal device.

Optionally, after the target network device acknowledges receiving the first configuration information, the target network device sends a first acknowledgment message to the terminal device. Correspondingly, the terminal device receives the first acknowledgment message from the target network device. The first acknowledgment message indicates that the target network device has received the first timing offset information. After the target network device receives the first timing offset information from the terminal device, the target network device first performs S703, and then performs S710.

S710: The target network device determines, based on the first configuration information, a resource used for data transmission between the terminal device and the target network device.

For a specific implementation process of S710, refer to related descriptions of S309. Details are not described herein again.

It should be noted that in this embodiment of this application, after performing S705, the terminal device may first perform S706, and then perform S707 and S708. Alternatively, the terminal device may first perform S707 and S708, and then perform S706. Alternatively, the terminal device may further simultaneously perform S706 and S707, or simultaneously perform S706 and S708. This is not limited in this embodiment of this application. In addition, S709 may be a step in the random access procedure, that is, S709 is performed in a process of performing S706. Alternatively, S709 and S706 may be two steps independent of each other. This is not limited in this embodiment of this application.

According to the communication method provided in this embodiment of this application, when the terminal device determines the target cell to which the terminal device is to hand over, or the terminal device determines to hand over to the target cell, the terminal device can update the first timing offset information in time, so that the target network device in the second network can obtain the updated first timing offset information in time. Therefore, after handing over to the target cell, in a process of transmitting data with the target network device in the second network, the terminal device can still receive the paging message from the network device in the first network in time. This can avoid "paging message receiving failure" caused by configuration information not being updated in the conventional technology in time.

The foregoing mainly describes the solutions provided in embodiments of this application from a perspective of interaction between network elements. Correspondingly, embodiments of this application further provide a communication apparatus. The communication apparatus may be the network element in the foregoing method embodiments, or an apparatus including the foregoing network element, or a component that can be used in the network element. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

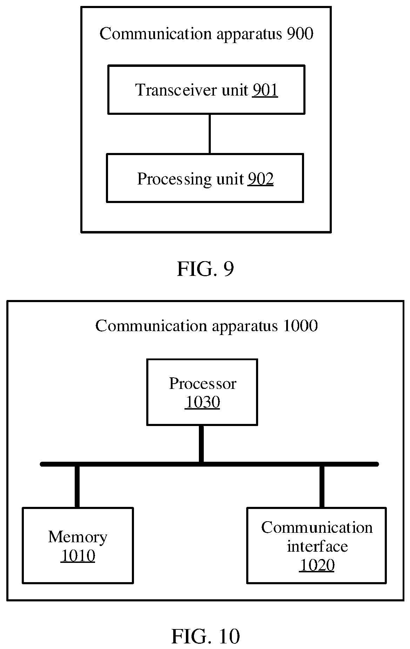

FIG. 9 is a schematic diagram of a structure of a communication apparatus 900. The communication apparatus 900 includes a transceiver unit 901 and a processing unit 902.

When the communication apparatus 900 is a terminal device or a network device, the transceiver unit 901 may be a sending unit or a transmitter when sending information, and the transceiver unit 901 may be a receiving unit or a receiver when receiving information. The transceiver unit 901 may be a transceiver, and the transceiver, the transmitter, or the receiver may be a radio frequency circuit. When the communication apparatus includes a storage unit, the storage unit is configured to store computer instructions. The storage unit may be a memory. The processor is communicatively connected to the memory, and the processor executes the computer instructions stored in the memory, so that the communication apparatus performs the method in any one of the embodiments in FIG. 2 to FIG. 8. The processor may be a general-purpose central processing unit (central processing unit/processor, CPU), a microprocessor, or an application-specific integrated circuit (application specific-integrated circuit, ASIC).

When the communication apparatus is a chip, the transceiver unit 901 may be an input and/or output interface, a pin, a circuit, or the like. The processing unit 902 may execute computer-executable instructions stored in a storage unit, so that the communication apparatus performs the method in any one of embodiments in FIG. 2 to FIG. 8. Optionally, the storage unit is a storage unit in the chip, for example, a register or a cache, or the storage unit may be a storage unit in the terminal device but outside the chip, for example, a read-only memory (read-only memory, ROM) or another type of static storage device capable of storing static information and instructions, or a random access memory (random access memory, RAM).

For example, the communication apparatus 900 is the terminal device shown in FIG. 2.

The processing unit 902 is configured to: determine a target first cell, determine to reselect a first cell, or determine to have reselected a first cell. The first cell belongs to a first network. The transceiver unit 901 is configured to send first information to a network device. The network device belongs to a second network. The first information is determined by the terminal device. The first information includes first configuration information and/or first timing offset information, the first configuration information includes to-be-used gap GAP configuration information or to-be-used time division multiplexing TDM pattern configuration information of the terminal device, and the first timing offset information includes a downlink timing offset between the first cell and a second cell. The second cell belongs to the second network, and a network device in the second network transmits data with the terminal device.

In a possible design, the processing unit 902 is further configured to determine the first configuration information based on downlink timing of the first cell and downlink timing of the second cell. Alternatively, the processing unit 902 is further configured to determine the first configuration information based on downlink timing of a cell before reselection, downlink timing of the first cell, and downlink timing of the second cell. Alternatively, the processing unit 902 is further configured to determine the first configuration information based on downlink timing of a cell before reselection, downlink timing of the first cell, downlink timing of the second cell, and second configuration information. The second configuration information is GAP configuration information or TDM pattern configuration information used by the terminal device before the terminal device reselects the first cell.

In a possible design, the processing unit 902 is further configured to determine the first configuration information based on downlink timing offset information between the first cell and the second cell. Alternatively, the processing unit 902 is further configured to determine the first configuration information based on downlink timing offset information between the first cell and the second cell and downlink timing offset information between the second cell and a cell before reselection. Alternatively, the processing unit 902 is further configured to determine the first configuration information based on downlink timing offset information between the first cell and the second cell and second configuration information. Alternatively, the processing unit 902 is further configured to determine the first configuration information based on downlink timing offset information between the first cell and the second cell, downlink timing offset information between the second cell and a cell before reselection, and second configuration information. The second configuration information is GAP configuration information or TDM pattern configuration information used by the terminal device before the terminal device reselects the first cell.

In a possible design, the processing unit 902 is further configured to: when a first condition is met, determine the first information. The first condition includes at least one of the following: the terminal device has camped on the first cell; the downlink timing of the cell before the terminal device reselects is different from the downlink timing of the first cell; a downlink timing offset between the downlink timing of the cell before the terminal device reselects and the downlink timing of the first cell is greater than a first threshold; and a network device to which the cell the terminal device reselects belongs is different from a network device to which the first cell belongs.

In a possible design, the processing unit 902 is further configured to obtain the downlink timing of the cell before reselection. The processing unit 902 is further configured to: if it is determined that there is a cell that has the same downlink timing as the cell before reselection, use, as the first cell, the cell that has the same downlink timing as the cell before reselection; or use, as the first cell, a cell whose offset from the downlink timing of the cell before reselection is less than or equal to the first threshold.

In a possible design, if the first information is the first timing offset information, the processing unit 902 is further configured to determine the first configuration information based on the first timing offset information. The first configuration information includes the to-be-used GAP configuration information or the to-be-used TDM pattern configuration information of the terminal device.

In a possible design, the transceiver unit 901 is further configured to receive a first acknowledgment message from the network device, where the first acknowledgment message indicates that the network device has received the first information.

For example, the communication apparatus 900 is the network device shown in FIG. 2.

The transceiver unit 901 is configured to receive first information from a terminal device. A network device belongs to a second network. The processing unit 902 is configured to determine, based on the first information, a resource used for data transmission between the terminal device and the network device. The first information includes first configuration information and/or first timing offset information, the first configuration information includes to-be-used gap GAP configuration information or to-be-used time division multiplexing TDM pattern configuration information of the terminal device, and the first timing offset information includes a downlink timing offset between a first cell and a second cell. The first cell belongs to a first network, the second cell belongs to the second network, and a network device in the second network transmits data with the terminal device.

In a possible design, if the first information is the first timing offset information, the processing unit 902 is further configured to determine the first configuration information based on the first timing offset information. The first configuration information includes the to-be-used GAP configuration information or the to-be-used TDM pattern configuration information of the terminal device.

In a possible design, the transceiver unit 901 is further configured to send a first acknowledgment message to the terminal device, where the first acknowledgment message indicates that the network device has received the first information.

For example, the communication apparatus 900 is the terminal device shown in FIG. 3 to FIG. 8.

The processing unit 902 is configured to determine a target cell to which the terminal device is to hand over or determine to hand over to a target cell. The target cell belongs to a second network. The transceiver unit 901 is configured to send first information to a network device. The network device belongs to the second network. The first information is determined by a terminal device. The first information includes first configuration information and/or first timing offset information. The first configuration information includes gap GAP configuration information or time division multiplexing TDM pattern configuration information used by the terminal device after the terminal device hands over to the target cell, and the first timing offset information includes a downlink timing offset between a source cell and the target cell, a downlink timing offset between a cell on which the terminal device camps in a first network and the target cell, or a downlink timing offset between a first cell and the target cell, where the first cell belongs to the first network.

In a possible design, the processing unit 902 is further configured to determine the first configuration information based on downlink timing of the first cell and downlink timing of the target cell. Alternatively, the processing unit 902 is further configured to determine the first configuration information based on downlink timing of the cell on which the terminal device camps in the first network and downlink timing of the target cell. Alternatively, the processing unit 902 is further configured to determine the first configuration information based on downlink timing of the source cell and downlink timing of the target cell. Alternatively, the processing unit 902 is further configured to determine the first configuration information based on downlink timing of the source cell, downlink timing of the target cell, and downlink timing of the cell on which the terminal device camps in the first network. Alternatively, the processing unit 902 is further configured to determine the first configuration information based on downlink timing of the source cell, downlink timing of the target cell, and second configuration information. Alternatively, the processing unit 902 is further configured to determine the first configuration information based on downlink timing of the source cell, downlink timing of the target cell, downlink timing of a second cell, and second configuration information. The second configuration information is GAP configuration information or TDM pattern configuration information used by the terminal device in the source cell.

In a possible design, the processing unit 902 is further configured to determine the first configuration information based on downlink timing offset information between the source cell and the target cell. Alternatively, the processing unit 902 is further configured to determine the first configuration information based on downlink timing offset information between the cell on which the terminal device camps in the first network and the target cell. Alternatively, the processing unit 902 is further configured to determine the first configuration information based on downlink timing offset information between a second cell and the source cell and downlink timing offset information between the second cell and the target cell. Alternatively, the processing unit 902 is further configured to determine the first configuration information based on downlink timing offset information between the source cell and the target cell and second configuration information. Alternatively, the processing unit 902 is further configured to determine the first configuration information based on downlink timing offset information between a second cell and the source cell, downlink timing offset information between the second cell and the target cell, and second configuration information. The second cell is a serving cell on which the terminal device camps when the terminal device does not perform cell reselection in the first network. The second configuration information is GAP configuration information or TDM pattern configuration information used by the terminal device in the source cell.

In a possible design, the processing unit 902 is further configured to determine the first timing offset information based on downlink timing of the source cell and downlink timing of the target cell. Alternatively, the processing unit 902 is further configured to determine the first timing offset information based on downlink timing of the cell on which the terminal device camps in the first network and downlink timing of the target cell. Alternatively, the processing unit 902 is further configured to determine the first timing offset information based on downlink timing of the first cell and downlink timing of the target cell.

In a possible design, the processing unit 902 is further configured to: when a first condition is met, determine the first information. The first condition includes at least one of the following: the downlink timing of the source cell is different from the downlink timing of the target cell; a downlink timing offset between the downlink timing of the source cell and the downlink timing of the target cell is greater than a first threshold; a network device to which the source cell belongs is different from a network device to which the target cell belongs; the downlink timing of the first cell is different from the downlink timing of the target cell; a downlink timing offset between the downlink timing of the first cell and the downlink timing of the target cell is greater than the first threshold; and a network device to which the first cell belongs is different from the network device to which the target cell belongs.

In a possible design, if the first information is the first timing offset information, the processing unit 902 is further configured to determine the first configuration information based on the first timing offset information. The first configuration information includes the GAP configuration information or the TDM pattern configuration information used by the terminal device after the terminal device hands over to the target cell.

In a possible design, the transceiver unit 901 is further configured to receive a first acknowledgment message from the network device, where the first acknowledgment message indicates that the network device has received the first information.

For example, the communication apparatus 900 is the source network device shown in FIG. 3 to FIG. 8, and the source network device may be described as a first network device.

The processing unit 902 is configured to determine to hand over a terminal device to a second network device. The transceiver unit 901 is configured to send a handover HO command to the terminal device, where the HO command includes indication information and first configuration information, the indication information indicates a target cell to which the terminal device is to hand over, and the first configuration information includes gap GAP configuration information or time division multiplexing TDM pattern configuration information used by the terminal device after the terminal device hands over to the target cell.

In a possible design, the transceiver unit 901 is further configured to receive first timing offset information from the terminal device. The first timing offset information includes a downlink timing offset between a source cell before the terminal device hands over and the target cell, includes a downlink timing offset between a cell on which the terminal device camps in a first network and the target cell, or includes a downlink timing offset between a first cell reselected by the terminal device in the first network and the target cell. The processing unit 902 is further configured to determine the first configuration information based on the first timing offset information. That a processing unit 902 is configured to determine to hand over a terminal device to a second network device includes: The processing unit 902 is configured to enable the transceiver unit 901 to send a handover request message to the second network device, where the handover request message includes the first configuration information; and the processing unit 902 is configured to enable the transceiver unit 901 to receive a handover acknowledgment message from the second network device. The first network device and the second network device belong to a second network.

In a possible design, the transceiver unit 901 is further configured to receive the first configuration information from the terminal device. That a processing unit 902 is configured to determine to hand over a terminal device to a second network device includes: The processing unit 902 is configured to enable the transceiver unit 901 to send a handover request message to the second network device, where the handover request message includes the first configuration information; and the processing unit 902 is configured to enable the transceiver unit 901 to receive a handover acknowledgment message from the second network device.

In a possible design, the transceiver unit 901 is further configured to receive first timing offset information from the terminal device. The first timing offset information includes a downlink timing offset between a source cell before the terminal device hands over and the target cell, includes a downlink timing offset between a cell on which the terminal device camps in a first network and the target cell, or includes a downlink timing offset between a first cell reselected by the terminal device in the first network and the target cell. That a processing unit 902 is configured to determine to hand over a terminal device to a second network device includes: The processing unit 902 is configured to enable the transceiver unit 901 to send a handover request message to the second network device, where the handover request message includes the first timing offset information, and the first timing offset information determines the first configuration information; and the processing unit 902 is configured to enable the transceiver unit 901 to receive a handover acknowledgment message from the second network device, where the handover acknowledgment message includes the first configuration information, and the first network device and the second network device belong to a second network.

For example, the communication apparatus 900 is the target network device shown in FIG. 3 to FIG. 8, and the target network device may be described as a second network device.

The transceiver unit 901 is configured to obtain first configuration information, where the first configuration information includes gap GAP configuration information or time division multiplexing TDM pattern configuration information used by a terminal device after the terminal device hands over to a target cell. The processing unit 902 is configured to determine, based on the first configuration information, a resource used for data transmission between the terminal device and the second network device.

In a possible design, that a transceiver unit 901 is configured to obtain first configuration information includes: The transceiver unit 901 is configured to receive the first configuration information from a first network device; or the transceiver unit 901 is configured to receive the first configuration information from the terminal device.

In a possible design, that a transceiver unit 901 is configured to obtain first configuration information includes: The transceiver unit 901 is configured to receive first timing offset information, where the first timing offset information includes a downlink timing offset between a source cell before the terminal device hands over and the target cell, includes a downlink timing offset between a cell on which the terminal device camps in a first network and the target cell, or includes a downlink timing offset between a first cell reselected by the terminal device in the first network and the target cell; and the processing unit 902 is further configured to determine the first configuration information based on the first timing offset information.

In a possible design, that the transceiver unit 901 is configured to receive first timing offset information includes: The transceiver unit 901 is configured to receive the first timing offset information from a first network device; or the transceiver unit 901 is configured to receive the first timing offset information from the terminal device.

In a possible design, that a transceiver unit 901 is configured to obtain first configuration information includes: The transceiver unit 901 is configured to receive first timing offset information and second configuration information from a first network device; and the processing unit 902 is configured to determine the first configuration information based on the first timing offset information and the second configuration information. The first timing offset information includes a downlink timing offset between a source cell before the terminal device hands over and the target cell, includes a downlink timing offset between a cell on which the terminal device camps in a first network and the target cell, or includes a downlink timing offset between a first cell reselected by the terminal device in the first network and the target cell. The second configuration information includes GAP configuration information or TDM pattern configuration information used by the terminal device when the terminal device is in the source cell.

All related content of the steps in the foregoing method embodiments may be cited in function descriptions of the corresponding functional modules. Details are not described herein again.

FIG. 10 is a schematic block diagram of a communication apparatus 1000 according to an embodiment of this application. It should be understood that the communication apparatus 1000 can perform the steps performed by the terminal device in the method in FIG. 2. To avoid repetition, details are not described herein again. The communication apparatus 1000 includes:
a memory 1010, configured to store a program;
a communication interface 1020, configured to communicate with another device; and
a processor 1030, configured to execute the program in the memory 1010. When the program is executed, the processor 1030 is configured to: after determining a target first cell, determining to reselect a first cell, or determining to have reselected a first cell, send first information to a network device through the communication interface 1020. The first cell belongs to a first network. The network device belongs to a second network. The first information is determined by a terminal device. The first information includes first configuration information and/or first timing offset information, the first configuration information includes to-be-used gap GAP configuration information or to-be-used time division multiplexing TDM pattern configuration information of the terminal device, and the first timing offset information includes a downlink timing offset between the first cell and a second cell. The second cell belongs to the second network, and a network device in the second network transmits data with the terminal device.

In a possible design, the processor 1030 is further configured to determine the first configuration information based on downlink timing of the first cell and downlink timing of the second cell. Alternatively, the processor 1030 is further configured to determine the first configuration information based on downlink timing of a cell before reselection, downlink timing of the first cell, and downlink timing of the second cell. Alternatively, the processor 1030 is further configured to determine the first configuration information based on downlink timing of a cell before reselection, downlink timing of the first cell, downlink timing of the second cell, and second configuration information. The second configuration information is GAP configuration information or TDM pattern configuration information used by the terminal device before the terminal device reselects the first cell.

In a possible design, the processor 1030 is further configured to determine the first configuration information based on downlink timing offset information between the first cell and the second cell. Alternatively, the processor 1030 is further configured to determine the first configuration information based on downlink timing offset information between the first cell and the second cell and downlink timing offset information between the second cell and a cell before reselection. Alternatively, the processor 1030 is further configured to determine the first configuration information based on downlink timing offset information between the first cell and the second cell and second configuration information. The second configuration information is GAP configuration information or TDM pattern configuration information used by the terminal device before the terminal device reselects the first cell. Alternatively, the processor 1030 is further configured to determine the first configuration information based on downlink timing offset information between the first cell and the second cell, downlink timing offset information between the second cell and a cell before reselection, and second configuration information.

In a possible design, the processor 1030 is further configured to: when a first condition is met, determine the first information. The first condition includes at least one of the following: the terminal device has camped on the first cell; the downlink timing of the cell before the terminal device reselects is different from the downlink timing of the first cell; a downlink timing offset between the downlink timing of the cell before the terminal device reselects and the downlink timing of the first cell is greater than a first threshold; and a network device to which the cell before the terminal device reselects belongs is different from a network device to which the first cell belongs.

In a possible design, the processor 1030 is further configured to obtain the downlink timing of the cell before reselection. If the terminal device determines that there is a cell that has the same downlink timing as the cell before reselection, the terminal device uses, as the first cell, the cell that has the same downlink timing as the cell before reselection; or uses, as the first cell, a cell whose offset from the downlink timing of the cell before reselection is less than or equal to the first threshold.

In a possible design, the processor 1030 is further configured to determine the first configuration information based on the first timing offset information. The first configuration information includes the to-be-used GAP configuration information or the to-be-used TDM pattern configuration information of the terminal device.

In a possible design, the communication interface 1020 is configured to receive a first acknowledgment message from the network device, where the first acknowledgment message indicates that the network device has received the first information.

It should be understood that the communication apparatus 1000 can perform steps performed by the terminal device in the method in any one of the embodiments in FIG. 3 to FIG. 8. To avoid repetition, details are not described herein again. The processor 1030 is configured to execute the program in the memory 1010. When the program is executed, the processor 1030 is configured to: after determining a target cell to which the terminal device is to hand over or determining to hand over to a target cell, send first information to a network device through the communication interface 1020. The target cell belongs to a second network. The network device belongs to the second network. The first information is determined by a terminal device. The first information includes first configuration information and/or first timing offset information, the first configuration information includes gap GAP configuration information or time division multiplexing TDM pattern configuration information used by the terminal device after the terminal device hands over to the target cell, and the first timing offset information includes a downlink timing offset between a source cell and the target cell, a downlink timing offset between a cell on which the terminal device camps in a first network and the target cell, or a downlink timing offset between a first cell and the target cell, where the first cell belongs to the first network.

In a possible design, the processor 1030 is further configured to determine the first configuration information based on downlink timing of the first cell and downlink timing of the target cell. Alternatively, the processor 1030 is further configured to determine the first configuration information based on downlink timing of the cell on which the terminal device camps in the first network and downlink timing of the target cell. Alternatively, the processor 1030 is further configured to determine the first configuration information based on downlink timing of the source cell and downlink timing of the target cell. Alternatively, the processor 1030 is further configured to determine the first configuration information based on downlink timing of the source cell, downlink timing of the target cell, and downlink timing of the cell on which the terminal device camps in the first network. Alternatively, the processor 1030 is further configured to determine the first configuration information based on downlink timing of the source cell, downlink timing of the target cell, and second configuration information. The second configuration information is GAP configuration information or TDM pattern configuration information used by the terminal device in the source cell. Alternatively, the processor 1030 is further configured to determine the first configuration information based on downlink timing of the source cell, downlink timing of the target cell, downlink timing of a second cell, and second configuration information.

In a possible design, the processor 1030 is further configured to determine the first configuration information based on downlink timing offset information between the source cell and the target cell. Alternatively, the processor 1030 is further configured to determine the first configuration information based on downlink timing offset information between the cell on which the terminal device camps in the first network and the target cell. Alternatively, the processor 1030 is further configured to determine the first configuration information based on downlink timing offset information between a second cell and the source cell and downlink timing offset information between the second cell and the target cell. The second cell is a serving cell on which the terminal device camps when the terminal device does not perform cell reselection in the first network. Alternatively, the processor 1030 is further configured to determine the first configuration information based on downlink timing offset information between the source cell and the target cell and second configuration information. The second configuration information is GAP configuration information or TDM pattern configuration information used by the terminal device in the source cell. Alternatively, the processor 1030 is further configured to determine the first configuration information based on downlink timing offset information between a second cell and the source cell, downlink timing offset information between the second cell and the target cell, and second configuration information.

In a possible design, the processor 1030 is further configured to determine the first timing offset information based on downlink timing of the source cell and downlink timing of the target cell. Alternatively, the processor 1030 is further configured to determine the first timing offset information based on downlink timing of the cell on which the terminal device camps in the first network and downlink timing of the target cell. Alternatively, the processor 1030 is further configured to determine the first timing offset information based on downlink timing of the first cell and downlink timing of the target cell.

In a possible design, the processor 1030 is further configured to: when a first condition is met, determine the first information. The first condition includes at least one of the following: the downlink timing of the source cell is different from the downlink timing of the target cell; a downlink timing offset between the downlink timing of the source cell and the downlink timing of the target cell is greater than a first threshold; a network device to which the source cell belongs is different from a network device to which the target cell belongs; the downlink timing of the first cell is different from the downlink timing of the target cell; a downlink timing offset between the downlink timing of the first cell and the downlink timing of the target cell is greater than the first threshold; and a network device to which the first cell belongs is different from the network device to which the target cell belongs.

In a possible design, if the first information is the first timing offset information, the processor 1030 is further configured to determine the first configuration information based on the first timing offset information. The first configuration information includes the GAP configuration information or the TDM pattern configuration information used by the terminal device after the terminal device hands over to the target cell.

In a possible design, the communication interface 1020 is further configured to receive a first acknowledgment message from the network device, where the first acknowledgment message indicates that the network device has received the first information.

It should be understood that the communication apparatus 1000 can perform the steps performed by the network device in the method in FIG. 2. To avoid repetition, details are not described herein again. The processor 1030 is configured to execute the program in the memory 1010. When the program is executed, the processor 1030 is configured to: after receiving first information from the terminal device through the communication interface 1020, determine, based on the first information, a resource used for data transmission between the terminal device and the network device. The network device belongs to a second network. The first information includes first configuration information and/or first timing offset information, the first configuration information includes to-be-used gap GAP configuration information or to-be-used time division multiplexing TDM pattern configuration information of the terminal device, and the first timing offset information includes a downlink timing offset between a first cell and a second cell. The first cell belongs to a first network, the second cell belongs to a second network, and a network device in the second network transmits data with the terminal device.

In a possible design, if the first information is the first timing offset information, the processor 1030 is further configured to determine the first configuration information based on the first timing offset information. The first configuration information includes the to-be-used GAP configuration information or the to-be-used TDM pattern configuration information of the terminal device.

In a possible design, the communication interface 1020 is further configured to send a first acknowledgment message to the terminal device, where the first acknowledgment message indicates that the network device has received the first information.

It should be understood that the communication apparatus 1000 can perform steps performed by the source network device in the method in any one of the embodiments in FIG. 3 to FIG. 8. To avoid repetition, details are not described herein again. The source network device may also be described as a first network device. The processor 1030 is configured to execute the program in the memory 1010. When the program is executed, the processor 1030 is configured to: after determining to hand over a terminal device to a second network device, send a handover HO command to the terminal device through the communication interface 1020, where the HO command includes indication information and first configuration information, the indication information indicates a target cell to which the terminal device is to hand over, and the first configuration information includes gap GAP configuration information or time division multiplexing TDM pattern configuration information used by the terminal device after the terminal device hands over to the target cell.

In a possible design, the communication interface 1020 is further configured to receive first timing offset information from the terminal device. The first timing offset information includes a downlink timing offset between a source cell before the terminal device hands over and the target cell, includes a downlink timing offset between a cell on which the terminal device camps in a first network and the target cell, or includes a downlink timing offset between a first cell reselected by the terminal device in the first network and the target cell. The processor 1030 is further configured to determine the first configuration information based on the first timing offset information. That a processor 1030 is configured to determine to hand over a terminal device to a second network device includes: The processor 1030 is configured to enable the communication interface 1020 to send a handover request message to the second network device, where the handover request message includes the first configuration information; and the processor 1030 is configured to enable the communication interface 1020 to receive a handover acknowledgment message from the second network device. The first network device and the second network device belong to a second network.

In a possible design, the communication interface 1020 is further configured to receive the first configuration information from the terminal device.

That a processor 1030 is configured to determine to hand over a terminal device to a second network device includes: The processor 1030 is configured to enable the communication interface 1020 to send a handover request message to the second network device, where the handover request message includes the first configuration information; and the processor 1030 is configured to enable the communication interface 1020 to receive a handover acknowledgment message from the second network device.

In a possible design, the communication interface 1020 is further configured to receive first timing offset information from the terminal device. The first timing offset information includes a downlink timing offset between a source cell before the terminal device hands over and the target cell, includes a downlink timing offset between a cell on which the terminal device camps in a first network and the target cell, or includes a downlink timing offset between a first cell reselected by the terminal device in the first network and the target cell.

That a processor 1030 is configured to determine to hand over a terminal device to a second network device includes: The processor 1030 is configured to enable the communication interface 1020 to send a handover request message to the second network device, where the handover request message includes the first timing offset information, and the first timing offset information determines the first configuration information; and the processor 1030 is configured to enable the communication interface 1020 to receive a handover acknowledgment message from the second network device, where the handover acknowledgment message includes the first configuration information, and the first network device and the second network device belong to a second network.

It should be understood that the communication apparatus 1000 can perform steps performed by the target network device in the method in any one of the embodiments in FIG. 3 to FIG. 8. To avoid repetition, details are not described herein again. The target network device may also be described as a second network device. The processor 1030 is configured to execute the program in the memory 1010. When the program is executed, the processor 1030 is configured to: after obtaining first configuration information through the communication interface 1020, determine, based on the first configuration information, a resource used for data transmission between the terminal device and the second network device. The first configuration information includes gap GAP configuration information or time division multiplexing TDM pattern configuration information used by the terminal device after the terminal device hands over to a target cell.

In a possible design, that the communication interface 1020 is configured to obtain first configuration information includes: The communication interface 1020 is configured to receive the first configuration information from a first network device; or the communication interface 1020 is configured to receive the first configuration information from the terminal device.

In a possible design, that the communication interface 1020 is configured to obtain first configuration information includes: The communication interface 1020 is configured to receive first timing offset information, and the processor 1030 is further configured to determine the first configuration information based on the first timing offset information. The first timing offset information includes a downlink timing offset between a source cell before the terminal device hands over and the target cell, includes a downlink timing offset between a cell on which the terminal device camps in a first network and the target cell, or includes a downlink timing offset between a first cell reselected by the terminal device in the first network and the target cell.

In a possible design, that the communication interface 1020 is configured to receive first timing offset information includes: The communication interface 1020 is configured to receive the first timing offset information from a first network device; or the communication interface 1020 is configured to receive the first timing offset information from the terminal device.

In a possible design, that the communication interface 1020 is configured to obtain first configuration information includes: The communication interface 1020 is configured to receive first timing offset information and second configuration information from a first network device; and the processor 1030 is configured to determine the first configuration information based on the first timing offset information and the second configuration information. The first timing offset information includes a downlink timing offset between a source cell before the terminal device hands over and the target cell, includes a downlink timing offset between a cell on which the terminal device camps in a first network and the target cell, or includes a downlink timing offset between a first cell reselected by the terminal device in the first network and the target cell. The second configuration information includes GAP configuration information or TDM pattern configuration information used by the terminal device when the terminal device is in the source cell.

It should be understood that the communication apparatus 1000 shown in FIG. 10 may be a chip or a circuit. For example, the communication apparatus 1000 is a chip or a circuit disposed in the terminal device. The communication interface 1020 may alternatively be a transceiver. The transceiver includes a receiver and a transmitter. Further, the communication apparatus 1000 may include a bus system.

The processor 1030, the memory 1010, the receiver, and the transmitter are connected to each other through the bus system. The processor 1030 is configured to execute instructions stored in the memory 1010, to control the receiver to receive a signal and control the transmitter to send a signal, and complete the steps performed by the terminal device or the network device in the communication method in this application. The receiver and the transmitter may be a same physical entity or different physical entities. When the receiver and the transmitter are a same physical entity, the receiver and the transmitter may be collectively referred to as a transceiver. The memory 1010 may be integrated into the processor 1030, or may be disposed separately from the processor 1030.

In an implementation, functions of the receiver and the transmitter may be considered to be implemented through a transceiver circuit or a dedicated transceiver chip. It may be considered that the processor 1030 is implemented by using a dedicated processing chip, a processing circuit, a processor, or a general-purpose chip.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc/disk, DVD)), a semiconductor medium (for example, a solid-state drive (solid state disk, SSD)), or the like.

In the foregoing embodiments of this application, "a plurality of" means two or more. The term "and/or" describes an association relationship for describing associated objects and represents that three relationships may exist. For example, A and/or B may represent the following three cases: Only A exists, both A and B exist, and only B exists. In addition, an element (element) that appears in singular forms "a", "an", and "the" does not mean "one or only one" unless otherwise specified in the context, but means "one or more". For example, "a device" means one or more such devices. Further, the term "at least one of (at least one of) ..." means one or any combination of subsequent associated objects. For example, "at least one of A, B, and C" includes A, B, C, AB, AC, BC, or ABC. Determining Y based on X does not mean that Y is determined based on only X, and Y may be further determined based on X and other information.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of a plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application.

This application is intended to cover these modifications and variations of this application provided that they fall within the scope of protection defined by the following claims.

## Claims

1. A communication method, comprising:
determining (S201, S301), by a terminal device, a target first cell, determining, by the terminal device, to reselect the first cell, or having reselected, by the terminal device, the first cell, wherein the first cell belongs to a first network; and
sending (S203, S303), by the terminal device, first information to a network device; wherein
the network device belongs to a second network; the first information is determined by the terminal device, the first information comprises first configuration information and/or first timing offset information, the first configuration information comprises to-be-used GAP configuration information or to-be-used time division multiplexing, TDM, pattern configuration information of the terminal device, and the first timing offset information comprises a downlink timing offset between the first cell and a second cell; and the second cell belongs to the second network, the network device in the second network transmits data with the terminal device, the terminal device is equipped with a first subscriber identity module card corresponding to the first network and a second subscriber identity module card corresponding to the second network, and the to-be-used GAP configuration information or the to-be-used TDM pattern configuration information indicates a time period in which the terminal device receives a paging message from the first network when the terminal device uses the second network for communication.

2. The communication method according to claim 1, wherein
after the terminal device has reselected the first cell, the to-be-used GAP configuration information of the terminal device comprises GAP configuration information used by the terminal device when the terminal device transmits data with the network device in the second network; or
after the terminal device has reselected the first cell, the to-be-used TDM pattern configuration information of the terminal device comprises TDM pattern configuration information used by the terminal device when the terminal device transmits data with the network device in the second network.

3. The communication method according to claim 1 or 2, wherein the method further comprises:
determining (S302), by the terminal device, the first configuration information based on downlink timing of the first cell and downlink timing of the second cell;
determining (S302), by the terminal device, the first configuration information based on downlink timing of a cell before reselection, downlink timing of the first cell, and downlink timing of the second cell; or
determining (S302), by the terminal device, the first configuration information based on downlink timing of a cell before reselection, downlink timing of the first cell, downlink timing of the second cell, and second configuration information, wherein the second configuration information is GAP configuration information or TDM pattern configuration information used by the terminal device before the terminal device reselects the first cell.

4. The communication method according to claim 1 or 2, wherein the method further comprises:
determining (S302), by the terminal device, the first configuration information based on downlink timing offset information between the first cell and the second cell;
determining (S302), by the terminal device, the first configuration information based on downlink timing offset information between the first cell and the second cell and downlink timing offset information between the second cell and a cell before reselection;
determining (S302), by the terminal device, the first configuration information based on downlink timing offset information between the first cell and the second cell and second configuration information, wherein the second configuration information is GAP configuration information or TDM pattern configuration information used by the terminal device before the terminal device reselects the first cell; or
determining (S302), by the terminal device, the first configuration information based on downlink timing offset information between the first cell and the second cell, downlink timing offset information between the second cell and a cell before reselection, and second configuration information.

5. The communication method according to any one of claims 1 to 4, wherein the method further comprises:
when a first condition is met, determining (S202), by the terminal device, the first information, wherein
the first condition comprises at least one of the following:
the terminal device has camped on the first cell;
the downlink timing of the cell before the terminal device reselects is different from the downlink timing of the first cell;
a downlink timing offset between the downlink timing of the cell before the terminal device reselects and the downlink timing of the first cell is greater than a first threshold; and
a network device to which the cell before the terminal device reselects belongs is different from a network device to which the first cell belongs.

6. The communication method according to any one of claims 1 to 5, wherein the method further comprises:
obtaining, by the terminal device, the downlink timing of the cell before reselection; and
if the terminal device determines that there is a cell that has the same downlink timing as the cell before reselection, using, by the terminal device as the first cell, the cell that has the same downlink timing as the cell before reselection; or
using, by the terminal device as the first cell, a cell whose offset from the downlink timing of the cell before reselection is less than or equal to the first threshold.

7. The communication method according to any one of claims 1 to 6, wherein if the first information is the first timing offset information, the method further comprises:
determining, by the terminal device, the first configuration information based on the first timing offset information; wherein
the first configuration information comprises the to-be-used GAP configuration information or the to-be-used TDM pattern configuration information of the terminal device.

8. The communication method according to any one of claims 1 to 7, wherein the method further comprises:
receiving, by the terminal device, a first acknowledgment message from the network device, wherein the first acknowledgment message indicates that the network device has received the first information.

9. A communication method, comprising:
receiving (S203), by a network device, first information from a terminal device, wherein the network device belongs to a second network; and
determining (S204), by the network device based on the first information, a resource used for data transmission between the terminal device and the network device; wherein
the first information comprises first configuration information and/or first timing offset information, the first configuration information comprises to-be-used GAP configuration information or to-be-used time division multiplexing, TDM, pattern configuration information of the terminal device, the first timing offset information comprises a downlink timing offset between a first cell and a second cell, the first cell belongs to a first network, the second cell belongs to the second network, the network device in the second network transmits data with the terminal device, the terminal device is equipped with a first subscriber identity module card corresponding to the first network and a second subscriber identity module card corresponding to the second network, and the to-be-used GAP configuration information or the to-be-used TDM pattern configuration information indicates a time period in which the terminal device receives a paging message from the first network when the terminal device uses the second network for communication.

10. The communication method according to claim 9, wherein
after the terminal device has reselected the first cell, the to-be-used GAP configuration information of the terminal device comprises GAP configuration information used by the terminal device when the terminal device transmits data with the network device in the second network; or
after the terminal device has reselected the first cell, the to-be-used TDM pattern configuration information of the terminal device comprises TDM pattern configuration information used by the terminal device when the terminal device transmits data with the network device in the second network.

11. The communication method according to claim 9 or 10, wherein if the first information is the first timing offset information, the method further comprises:
determining, by the network device, the first configuration information based on the first timing offset information; wherein
the first configuration information comprises the to-be-used GAP configuration information or the to-be-used TDM pattern configuration information of the terminal device.

12. The communication method according to any one of claims 9 to 11, wherein the method further comprises:
sending (S205), by the network device, a first acknowledgment message to the terminal device, wherein the first acknowledgment message indicates that the network device has received the first information.

13. A communication apparatus configured to perform any one of the methods according to claims 1 to 8, wherein the communication apparatus is a terminal device, or a chip used in a terminal device.

14. A communication apparatus configured to perform any one of the methods according to claims 9 to 12, wherein the communication apparatus is a network device, or a chip used in a network device.

15. A computer-readable storage medium, wherein the computer-readable storage medium stores instructions, and when the instructions are run on a processing unit of a terminal device, the terminal device is enabled to perform the method according to any one of claims 1 to 8, or when the instructions are run on a processing unit of a network device, the network device is enabled to perfom the method according to any one of claims 9 to 12.

## Patentansprüche

1. Kommunikationsverfahren, umfassend:
Bestimmen (S201, S301), durch ein Endgerät, einer ersten Zielzelle, Bestimmen, durch das Endgerät die erste Zelle neu auszuwählen oder durch das Endgerät die erste Zelle neu auswählen zu lassen, wobei die erste Zelle zu einem ersten Netzwerk gehört; und
Senden (S203, S303), durch das Endgerät, von ersten Informationen an ein Netzwerkgerät; wobei
das Netzwerkgerät zu einem zweiten Netzwerk gehört; die ersten Informationen durch das Endgerät bestimmt werden, die ersten Informationen erste Konfigurationsinformationen und/oder erste Zeitsteuerungsversatz-Informationen umfassen, die ersten Konfigurationsinformationen zu verwendende GAP-Konfigurationsinformationen oder zu verwendende Zeitmultiplexing- bzw. TDM-Muster-Konfigurationsinformationen des Endgeräts umfassen und die ersten Zeitsteuerungsversatz-Informationen einen Abwärtsstrecken-Zeitsteuerungsversatz zwischen der ersten Zelle und einer zweiten Zelle umfassen; und die zweite Zelle zu dem zweiten Netzwerk gehört, das Netzwerkgerät in dem zweiten Netzwerk Daten mit dem Endgerät überträgt, das Endgerät mit einer ersten Teilnehmeridentitäts-Modulkarte korrespondierend mit dem ersten Netzwerk und einer zweiten Teilnehmeridentitäts-Modulkarte korrespondierend mit dem zweiten Netzwerk ausgerüstet ist und die zu verwendenden GAP-Konfigurationsinformationen oder die zu verwendenden TDM-Muster-Konfigurationsinformationen eine Zeitperiode angeben, in der das Endgerät eine Suchrufnachricht von dem ersten Netzwerk empfängt, wenn das Endgerät das zweite Netzwerk für Kommunikation verwendet.

2. Kommunikationsverfahren nach Anspruch 1, wobei
nachdem das Endgerät die erste Zelle neu ausgewählt hat, die zu verwendenden GAP-Konfigurationsinformationen des Endgeräts durch das Endgerät verwendete GAP-Konfigurationsinformationen umfassen, wenn das Endgerät Daten mit dem Netzwerkgerät in dem zweiten Netzwerk überträgt; oder
nachdem das Endgerät die erste Zelle neu ausgewählt hat, die zu verwendenden TDM-Muster-Konfigurationsinformationen des Endgeräts durch das Endgerät verwendete TDM-Muster-Konfigurationsinformationen umfassen, wenn das Endgerät Daten mit dem Netzwerkgerät in dem zweiten Netzwerk überträgt.

3. Kommunikationsverfahren nach Anspruch 1 oder 2, wobei das Verfahren ferner umfasst:
Bestimmen (S302), durch das Endgerät, der ersten Konfigurationsinformationen basierend auf einer Abwärtsstrecken-Zeitsteuerung der ersten Zelle und einer Abwärtsstrecken-Zeitsteuerung der zweiten Zelle;
Bestimmen (S302), durch das Endgerät, der ersten Konfigurationsinformationen basierend auf einer Abwärtsstrecken-Zeitsteuerung einer Zelle vor Neuauswahl, einer Abwärtsstrecken-Zeitsteuerung der ersten Zelle und einer Abwärtsstrecken-Zeitsteuerung der zweiten Zelle; oder
Bestimmen (S302), durch das Endgerät, der ersten Konfigurationsinformationen basierend auf einer Abwärtsstrecken-Zeitsteuerung einer Zelle vor Neuauswahl, einer Abwärtsstrecken-Zeitsteuerung der ersten Zelle, einer Abwärtsstrecken-Zeitsteuerung der zweiten Zelle und zweiten Konfigurationsinformationen, wobei die zweiten Konfigurationsinformationen GAP-Konfigurationsinformationen oder durch das Endgerät verwendete TDM-Muster-Konfigurationsinformationen, bevor das Endgerät die erste Zelle neu auswählt, sind.

4. Kommunikationsverfahren nach Anspruch 1 oder 2, wobei das Verfahren ferner umfasst:
Bestimmen (S302), durch das Endgerät, der ersten Konfigurationsinformationen basierend auf Abwärtsstrecken-Zeitsteuerungsversatz-Informationen zwischen der ersten Zelle und der zweiten Zelle;
Bestimmen (S302), durch das Endgerät, der ersten Konfigurationsinformationen basierend auf Abwärtsstrecken-Zeitsteuerungsversatz-Informationen zwischen der ersten Zelle und der zweiten Zelle und Abwärtsstrecken-Zeitsteuerungsversatz-Informationen zwischen der zweiten Zelle und einer Zelle vor Neuauswahl;
Bestimmen (S302), durch das Endgerät, der ersten Konfigurationsinformationen basierend auf Abwärtsstrecken-Zeitsteuerungsversatz-Informationen zwischen der ersten Zelle und der zweiten Zelle und zweiten Konfigurationsinformationen, wobei die zweiten Konfigurationsinformationen GAP-Konfigurationsinformationen oder durch das Endgerät verwendete TDM-Muster-Konfigurationsinformationen, bevor das Endgerät die erste Zelle neu auswählt, sind; oder
Bestimmen (S302), durch das Endgerät, der ersten Konfigurationsinformationen basierend auf Abwärtsstrecken-Zeitsteuerungsversatz-Informationen zwischen der ersten Zelle und der zweiten Zelle, Abwärtsstrecken-Zeitsteuerungsversatz-Informationen zwischen der zweiten Zelle und einer Zelle vor Neuauswahl und zweiten Konfigurationsinformationen.

5. Kommunikationsverfahren nach einem der Ansprüche 1 bis 4, wobei das Verfahren ferner umfasst:
wenn eine erste Bedingung erfüllt ist, Bestimmen (S202), durch das Endgerät, der ersten Informationen, wobei
die erste Bedingung mindestens eines des Folgenden umfasst:
das Endgerät hat sich auf die erste Zelle aufgehalten;
die Abwärtsstrecken-Zeitsteuerung der Zelle, bevor das Endgerät neu auswählt, ist von der Abwärtsstrecken-Zeitsteuerung der ersten Zelle verschieden;
ein Abwärtsstrecken-Zeitsteuerungsversatz zwischen der Abwärtsstrecken-Zeitsteuerung der Zelle, bevor das Endgerät neu auswählt, und der Abwärtsstrecken-Zeitsteuerung der ersten Zelle ist größer als ein erster Schwellenwert; und
ein Netzwerkgerät, zu der die Zelle, bevor das Endgerät neu auswählt, gehört, ist von einem Netzwerkgerät, zu der die erste Zelle gehört, verschieden.

6. Kommunikationsverfahren nach einem der Ansprüche 1 bis 5, wobei das Verfahren ferner umfasst:
Erlangen, durch das Endgerät, der Abwärtsstrecken-Zeitsteuerung der Zelle vor Neuauswahl; und
wenn das Endgerät bestimmt, dass eine Zelle vorhanden ist, die die gleiche Abwärtsstrecken-Zeitsteuerung wie die Zelle vor Neuauswahl aufweist, Verwenden, durch das Endgerät als die erste Zelle, der Zelle, die die gleiche Abwärtsstrecken-Zeitsteuerung wie die Zelle vor Neuauswahl aufweist; oder
Verwenden, durch das Endgerät als die erste Zelle, einer Zelle, deren Versatz von der Abwärtsstrecken-Zeitsteuerung der Zelle vor Neuauswahl kleiner als der oder gleich dem ersten Schwellenwert ist.

7. Kommunikationsverfahren nach einem der Ansprüche 1 bis 6, wobei, wenn die ersten Informationen die ersten Zeitsteuerungsversatz-Informationen sind, das Verfahren ferner umfasst:
Bestimmen, durch das Endgerät, der ersten Konfigurationsinformationen basierend auf den ersten Zeitsteuerungsversatz-Informationen; wobei
die ersten Konfigurationsinformationen die zu verwendenden GAP-Konfigurationsinformationen oder die zu verwendenden TDM-Muster-Konfigurationsinformationen des Endgeräts umfassen.

8. Kommunikationsverfahren nach einem der Ansprüche 1 bis 7, wobei das Verfahren ferner umfasst:
Empfangen, durch das Endgerät, einer ersten Bestätigungsnachricht von dem Netzwerkgerät, wobei die erste Bestätigungsnachricht angibt, dass das Netzwerkgerät die ersten Informationen empfangen hat.

9. Kommunikationsverfahren, umfassend:
Empfangen (S203), durch ein Netzwerkgerät, von ersten Informationen von einem Endgerät, wobei das Netzwerkgerät zu einem zweiten Netzwerk gehört; und
Bestimmen (S204), durch das Netzwerkgerät basierend auf den ersten Informationen, eines Betriebsmittels, das für Datenübertragung zwischen dem Endgerät und dem Netzwerkgerät verwendet wird; wobei
die ersten Informationen erste Konfigurationsinformationen und/oder erste Zeitsteuerungsversatz-Informationen umfassen, die ersten Konfigurationsinformationen zu verwendende GAP-Konfigurationsinformationen oder zu verwendende Zeitmultiplexing- bzw. TDM-Muster-Konfigurationsinformationen des Endgeräts umfassen, die ersten Zeitsteuerungsversatz-Informationen einen Abwärtsstrecken-Zeitsteuerungsversatz zwischen einer ersten Zelle und einer zweiten Zelle umfassen, die erste Zelle zu einem ersten Netzwerk gehört, die zweite Zelle zu dem zweiten Netzwerk gehört, das Netzwerkgerät in dem zweiten Netzwerk Daten mit dem Endgerät überträgt, das Endgerät mit einer ersten Teilnehmeridentitäts-Modulkarte korrespondierend mit dem ersten Netzwerk und einer zweiten Teilnehmeridentitäts-Modulkarte korrespondierend mit dem zweiten Netzwerk ausgerüstet ist und die zu verwendenden GAP-Konfigurationsinformationen oder die zu verwendenden TDM-Muster-Konfigurationsinformationen eine Zeitperiode angeben, in der das Endgerät eine Suchrufnachricht von dem ersten Netzwerk empfängt, wenn das Endgerät das zweite Netzwerk für Kommunikation verwendet.

10. Kommunikationsverfahren nach Anspruch 9, wobei
nachdem das Endgerät die erste Zelle neu ausgewählt hat, die zu verwendenden GAP-Konfigurationsinformationen des Endgeräts durch das Endgerät verwendete GAP-Konfigurationsinformationen umfassen, wenn das Endgerät Daten mit dem Netzwerkgerät in dem zweiten Netzwerk überträgt; oder
nachdem das Endgerät die erste Zelle neu ausgewählt hat, die zu verwendenden TDM-Muster-Konfigurationsinformationen des Endgeräts durch das Endgerät verwendete TDM-Muster-Konfigurationsinformationen umfassen, wenn das Endgerät Daten mit dem Netzwerkgerät in dem zweiten Netzwerk überträgt.

11. Kommunikationsverfahren nach Anspruch 9 oder 10, wobei, wenn die ersten Informationen die ersten Zeitsteuerungsversatz-Informationen sind, das Verfahren ferner umfasst:
Bestimmen, durch das Netzwerkgerät, der ersten Konfigurationsinformationen basierend auf den ersten Zeitsteuerungsversatz-Informationen; wobei
die ersten Konfigurationsinformationen die zu verwendenden GAP-Konfigurationsinformationen oder die zu verwendenden TDM-Muster-Konfigurationsinformationen des Endgeräts umfassen.

12. Kommunikationsverfahren nach einem der Ansprüche 9 bis 11, wobei das Verfahren ferner umfasst:
Senden (S205), durch das Netzwerkgerät, einer ersten Bestätigungsnachricht an das Endgerät, wobei die erste Bestätigungsnachricht angibt, dass das Netzwerkgerät die ersten Informationen empfangen hat.

13. Kommunikationsvorrichtung, konfiguriert zum Durchführen eines der Verfahren nach den Ansprüchen 1 bis 8, wobei die Kommunikationsvorrichtung ein Endgerät oder ein in einem Endgerät verwendeter Chip ist.

14. Kommunikationsvorrichtung, konfiguriert zum Durchführen eines der Verfahren nach den Ansprüchen 9 bis 12, wobei die Kommunikationsvorrichtung ein Netzwerkgerät oder ein in einem Netzwerkgerät verwendeter Chip ist.

15. Computerlesbares Speichermedium, wobei das computerlesbare Speichermedium Anweisungen speichert, und wenn die Anweisungen in einer Verarbeitungseinheit eines Endgeräts ausgeführt werden, das Endgerät in die Lage versetzt wird, das Verfahren nach einem der Ansprüche 1 bis 8 durchzuführen, oder wenn die Anweisungen in einer Verarbeitungseinheit eines Netzwerkgeräts ausgeführt werden, das Netzwerkgerät in die Lage versetzt wird, das Verfahren nach einem der Ansprüche 9 bis 12 durchzuführen.

## Revendications

1. Procédé de communication, comprenant :
la détermination (S201, S301), par un dispositif terminal, d'une première cellule cible, la détermination, par le dispositif terminal, de resélectionner cette première cellule, ou de faire en sorte que cette première cellule soit resélectionnée par le dispositif terminal, cette première cellule appartenant à un premier réseau ; et
l'envoi (S203, S303), par le dispositif terminal, d'une première information à un périphérique réseau ; ce périphérique réseau appartenant à un deuxième réseau ; cette première information étant déterminée par le dispositif terminal, cette première information comprenant une première information de configuration et/ou une première information de décalage de synchronisation, la première information de configuration comprenant une information de configuration GAP à utiliser ou une information de configuration de motif de multiplexage par répartition dans le temps, TDM, à utiliser du dispositif terminal, et la première information de décalage de la synchronisation comprenant un décalage de synchronisation en liaison descendante entre la première cellule et une deuxième cellule ; et la deuxième cellule appartenant au deuxième réseau, le périphérique réseau dans le deuxième réseau transmettant des données avec le dispositif terminal, le dispositif terminal étant pourvu d'une première carte de module d'identification d'abonné correspondant au premier réseau et une deuxième carte de module d'identification d'abonné correspondant au deuxième réseau, et l'information de configuration GAP à utiliser ou l'information de configuration du motif TDM à utiliser indiquant une période de temps pendant laquelle le dispositif terminal reçoit un message de radiomessagerie du premier réseau lorsque le dispositif terminal utilise le deuxième réseau pour la communication.

2. Procédé de communication selon la revendication 1, dans lequel
après que le dispositif terminal a resélectionné la première cellule, l'information de configuration GAP à utiliser du dispositif terminal comprend une information de configuration GAP utilisée par le dispositif terminal lorsque le dispositif terminal transmet des données avec le périphérique réseau dans le deuxième réseau ; ou dans lequel
après que le dispositif terminal a resélectionné la première cellule, l'information de configuration du motif TDM à utiliser du dispositif terminal comprend une information de configuration de motif TDM utilisée par le dispositif terminal lorsque le dispositif terminal transmet des données avec le périphérique réseau dans le deuxième réseau.

3. Procédé de communication selon la revendication 1 ou 2, ce procédé comprenant en outre :
la détermination (S302), par le dispositif terminal, de la première information de configuration en se basant sur la synchronisation en liaison descendante de la première cellule et sur la synchronisation en liaison descendante de la deuxième cellule ;
la détermination (S302), par le dispositif terminal, de la première information de configuration en se basant sur la synchronisation en liaison descendante d'une cellule avant la resélection, sur la synchronisation en liaison descendante de la première cellule, et sur la synchronisation en liaison descendante de la deuxième cellule ; ou
la détermination (S302), par le dispositif terminal, de la première information de configuration en se basant sur la synchronisation en liaison descendante d'une cellule avant la resélection, sur la synchronisation en liaison descendante de la première cellule, sur la synchronisation en liaison descendante de la deuxième cellule, et sur une deuxième information de configuration, cette deuxième information de configuration étant une information de configuration GAP, ou une information de configuration de motif TDM utilisée par le dispositif terminal avant que le dispositif terminal ne resélectionne la première cellule.

4. Procédé de communication selon la revendication 1 ou 2, ce procédé comprenant en outre :
la détermination (S302), par le dispositif terminal, de la première information de configuration en se basant sur l'information de décalage de la synchronisation en liaison descendante entre la première cellule et la deuxième cellule ;
la détermination (S302), par le dispositif terminal, de la première information de configuration en se basant sur l'information de décalage de la synchronisation en liaison descendante entre la première cellule et la deuxième cellule et sur l'information de décalage de la synchronisation en liaison descendante entre la deuxième cellule et une cellule avant la resélection ;
la détermination (S302), par le dispositif terminal, de la première information de configuration en se basant sur l'information de décalage de la synchronisation en liaison descendante entre la première cellule et la deuxième cellule et sur la deuxième information de configuration, la deuxième information de configuration étant une information de configuration GAP ou une information de configuration de motif TDM utilisée par le dispositif terminal avant que le dispositif terminal ne resélectionne la première cellule ; ou
la détermination (S302), par le dispositif terminal, de la première information de configuration en se basant sur l'information de décalage de la synchronisation en liaison descendante entre la première cellule et la deuxième cellule, sur l'information de décalage de la synchronisation en liaison descendante entre la deuxième cellule et une cellule avant la resélection, et sur la deuxième information de configuration.

5. Procédé de communication selon l'une quelconque des revendications 1 à 4, ce procédé comprenant en outre :
lorsqu'une première condition est remplie, la détermination (S202), par le dispositif terminal, de la première information, cette première condition comprenant au moins une des conditions suivantes :
le dispositif terminal a résidé sur la première cellule ;
la synchronisation en liaison descendante de la cellule avant que le dispositif terminal n'ait effectué la resélection est différente de la synchronisation en liaison descendante de la première cellule ;
un décalage de la synchronisation en liaison descendante entre la synchronisation en liaison descendante de la cellule avant que le dispositif terminal n'ait effectué la resélection et la synchronisation en liaison descendante de la première cellule est plus grand qu'un premier seuil ; et
un périphérique réseau auquel appartient la cellule avant que le dispositif terminal n'effectue la resélection est différent d'un périphérique réseau auquel appartient la première cellule.

6. Procédé de communication selon l'une quelconque des revendications 1 à 5, ce procédé comprenant en outre :
l'obtention, par le dispositif terminal, de la synchronisation en liaison descendante de la cellule avant la resélection ; et
si le dispositif terminal détermine qu'il y a une cellule qui a la même synchronisation en liaison descendante que la cellule avant la resélection, l'utilisation, par le dispositif terminal comme la première cellule, de la cellule qui a la même synchronisation en liaison descendante que la cellule avant la resélection ; ou
l'utilisation, par le dispositif terminal comme la première cellule, d'une cellule dont le décalage relativement à la synchronisation en liaison descendante de la cellule avant la resélection est plus petit que ou égal au premier seuil.

7. Procédé de communication selon l'une quelconque des revendications 1 à 6, ce procédé comprenant en outre, si la première information est la première information de décalage de la synchronisation :
la détermination, par le dispositif terminal, de la première information de configuration en se basant sur la première information de décalage de la synchronisation ;
la première information de configuration comprenant l'information de configuration GAP à utiliser ou l'information de configuration du motif TDM à utiliser du dispositif terminal.

8. Procédé de communication selon l'une quelconque des revendications 1 à 7, ce procédé comprenant en outre :
la réception, par le dispositif terminal, d'un premier message d'accusé de réception en provenance du périphérique réseau, ce premier message d'accusé de réception indiquant que le périphérique réseau a reçu la première information.

9. Procédé de communication, comprenant :
la réception (S203), par un périphérique réseau, d'une première information venant d'un dispositif terminal, le périphérique réseau appartenant à un deuxième réseau ; et
la détermination (S204), par le périphérique réseau en se basant sur la première information, d'une ressource utilisée pour la transmission de données entre le dispositif terminal et le périphérique réseau ;
la première information comprenant une première information de configuration et/ou une première information de décalage de synchronisation, la première information de configuration comprenant une information de configuration GAP à utiliser ou une information de configuration de motif du multiplexage par répartition dans le temps, TDM, à utiliser du dispositif terminal, et la première information de décalage de la synchronisation comprenant un décalage de la synchronisation en liaison descendante entre une première cellule et une deuxième cellule, la première cellule appartenant à un premier réseau, la deuxième cellule appartenant au deuxième réseau, le périphérique réseau dans le deuxième réseau transmettant des données avec le dispositif terminal, le dispositif terminal étant pourvu d'une première carte de module d'identification d'abonné correspondant au premier réseau et d'une deuxième carte de module d'identification d'abonné correspondant au deuxième réseau, et l'information de configuration GAP à utiliser ou l'information de configuration du motif TDM à utiliser indiquant une période de temps pendant laquelle le dispositif terminal reçoit un message de radiomessagerie du premier réseau lorsque le dispositif terminal utilise le deuxième réseau pour la communication.

10. Procédé de communication selon la revendication 9, dans lequel
après que le dispositif terminal a resélectionné la première cellule, l'information de configuration GAP à utiliser du dispositif terminal comprend une information de configuration GAP utilisée par le dispositif terminal lorsque le dispositif terminal transmet des données avec le périphérique réseau dans le deuxième réseau ; ou
après que le dispositif terminal a resélectionné la première cellule, l'information de configuration du motif TDM à utiliser du dispositif terminal comprend une information de configuration de motif TDM utilisée par le dispositif terminal lorsque le dispositif terminal transmet des données avec le périphérique réseau dans le deuxième réseau.

11. Procédé de communication selon la revendication 9 ou 10, ce procédé comprenant en outre, si la première information est la première information du décalage de la synchronisation :
la détermination, par le périphérique réseau, de la première information de configuration en se basant sur la première information du décalage de la synchronisation ;
la première information de configuration comprenant l'information de configuration GAP à utiliser ou l'information de configuration du motif TDM à utiliser du dispositif terminal.

12. Procédé de communication selon l'une quelconque des revendications 9 à 11, ce procédé comprenant en outre :
l'envoi (S205), par le périphérique réseau, d'un premier message d'accusé de réception au dispositif terminal, ce premier message d'accusé de réception indiquant que le périphérique réseau a reçu la première information.

13. Appareil de communication configuré de façon à exécuter l'un quelconque des procédés selon les revendications 1 à 8, cet appareil de communication étant un dispositif terminal, ou une puce utilisée dans un dispositif terminal.

14. Appareil de communication configuré de façon à exécuter l'un quelconque des procédés selon les revendications 9 à 12, cet appareil de communication étant un périphérique réseau, ou une puce utilisée dans un périphérique réseau.

15. Support de stockage lisible par ordinateur, ce support de stockage lisible par ordinateur stockant des instructions, et lorsque ces instructions sont exécutées sur une unité de traitement d'un dispositif terminal, ce dispositif terminal est activé pour exécuter le procédé selon l'une quelconque des revendications 1 à 8, ou, lorsque ces instructions sont exécutées sur une unité de traitement d'un périphérique réseau, ce périphérique réseau est activé pour exécuter le procédé selon l'une quelconque des revendications 9 à 12.
